# EUROPEAN PATENT APPLICATION

(11) **EP 4 822 297 A1**
(43) Date of publication of application: **14.10.2026**
(21) Application number: 25170054.8
(22) Date of filing: 11.04.2025
(51) Int. Cl.: G01C 21/26, G01C 21/00, B60W 50/00

(54) **METHODS AND SYSTEMS FOR PROVIDING VEHICLE HORIZON DATA**

(71) Applicant: TomTom Navigation B.V., 1011 AC Amsterdam (NL)
(72) Inventor: IVANNIKOV, Yevhen Yuriiovych, 1011 AC Amsterdam (NL); BERTOLDI, Rafael Floriani, 1011 AC Amsterdam (NL)
(74) Representative: Dehns

(57) **Abstract**

A method of providing horizon data to a client ADAS application in respect of a vehicle travelling along a main path of the horizon includes generating and transmitting profile messages in respect of an attribute to the client ADAS application. Each profile message includes an attribute value and offset data indicative of an offset along the main path of a location to which the attribute value relates. Where the offset of the given location from an origin of the main path does not exceed an offset threshold, the profile message offset of the given location is the offset from the origin of the main path. Where the offset exceeds the offset threshold, the profile message offset is instead defined relative to an integer multiple of the offset threshold along the main path. Profile messages in respect of the attribute are transmitted in order of offset of the given locations to which the messages relate from the origin of the main path, even where the offset from the origin of the main path exceeds the offset threshold. Profile messages are generated and transmitted in respect of given locations at which a change in the attribute occurs. Additional profile messages to assist in use of the horizon data by the client ADAS application are transmitted in respect of locations at which no change in the value of the attribute occurs.

## Description

### Field of the invention

The present invention relates to methods and systems for providing vehicle horizon data, and more particularly to providing Advanced Driver Assistance System (ADAS) horizon data to a client Advanced Driver Assistance System (ADAS) application of a vehicle.

### Background to the invention

Advanced Driver Assistance Systems (ADAS) are used in vehicles to provide assistance to drivers in areas such as braking, collision avoidance, and speed selection. Such systems may help to reduce driver workload, and may be useful in improving safety, vehicle operating efficiency, driver comfort and/or fuel efficiency. ADAS may be used to implement differing levels of automation ranging from providing information to a driver to enable the driver to make decisions to use in fully automated applications. An ADAS for use in a fully automated context may be referred to as an Automated Driving Application System (ADS). The term "ADAS" as used herein encompasses ADS.

Operation of an ADAS relies upon knowledge of the road ahead, and its properties. For example, the ADAS may take into account factors such as the curvature or gradient of a section of the road ahead in order to determine a suitable speed for traversing the section, and may then, for example, control the braking subsystems of the vehicle in order to implement the determined speed.

Typically a subsystem of the ADAS, which may be known as an ADAS horizon provider subsystem, communicates with ADAS applications of a vehicle network in order to control vehicle subsystems. For example, the ADAS horizon provider subsystem may communicate with the ADAS applications over a vehicle bus, such as a Controller Area Network (CAN) bus. Different ADAS applications may control different respective vehicle subsystems in accordance with the information received from the horizon provider over the vehicle bus. For example, there may be ADAS applications in respect of braking, suspension, etc. The horizon provider subsystem provides horizon information which may be used by the ADAS applications associated with given vehicle subsystems to provide control of the respective vehicle subsystems using the horizon data.

The ADAS applications of a vehicle are client ADAS applications that receive the ADAS data from the ADAS horizon provider e.g. over the vehicle bus, and then reconstruct and use the ADAS horizon. An ADAS application may comprise an ADAS horizon reconstructor subsystem which enables it to reconstruct a copy of the ADAS horizon using the ADAS horizon data received from the ADAS horizon provider. In this way, a copy of the ADAS horizon is reconstructed on the client side.

One aspect of the operation of the ADAS horizon provider subsystem relates to the generation of a suitable ADAS "horizon" for communication to the vehicle subsystems i.e. to the client ADAS applications of the vehicle. The ADAS horizon comprises information about a portion of the road network ahead, which is used by the ADAS applications to implement ADAS functionality with respect to the vehicle subsystems. The ADAS horizon is an electronic horizon.

Determination of the ADAS horizon involves predicting the path or paths that the vehicle may travel in the immediate future, to ensure that the necessary data is transmitted to the client ADAS applications to allow implementation of ADAS functions by the vehicle subsystems as the vehicle travels. The vehicle horizon provides the information required by the vehicle subsystems i.e. client ADAS applications thereof to perform their functions, but without needing to transmit unnecessary digital map data. For example, a vehicle horizon will typically provide data relating only to a path or paths the vehicle is likely to take in the future. Data relating to roads the vehicle is not expected to travel is not included in the vehicle horizon.

The ADAS horizon may include information obtained from digital map data about the course of a road ahead, and associated attributes of the road, such as curvature, gradient, etc which may be used by ADAS applications of the vehicle to implement ADAS control of the vehicle subsystems. For example, the horizon data may be used to provide comfort and safety features based on digital map data ahead of the vehicle. ADAS applications associated with different vehicle systems may filter the provided ADAS horizon data to extract the information required for controlling their relevant subsystem, or the horizon providing subsystem may be configured to only provide horizon data to particular ADAS applications that is relevant thereto. For example, road curvature data may be required for use in controlling the braking system.

The ADASIS v2 protocol is an automotive standard protocol defining how an ADAS horizon may be communicated from the ADAS horizon provider to vehicle ADAS applications. ADASIS stands for "Advanced Driver Assistance Systems Interface Specifications". This protocol enables data relating to a path ahead of a vehicle based on digital map data to be delivered to ADAS applications of the vehicle in a convenient vehicle-centric way.

The Applicant has recognised that there is scope to further improve the way in which ADAS horizon data may be provided to client ADAS applications of a vehicle. For example, while ADASISv2 may be sufficient to provide horizon data to support certain functionality of ADAS applications e.g. comfort and safety applications, which do not rely upon the horizon extending particularly far ahead of a current position of the vehicle, other ADAS applications would ideally receive horizon information based on digital map data further ahead. For example, while horizon data relating to distances of a few hundred meters ahead of a vehicle position, and generally within a range of a few kilometres, would be sufficient for many contexts, including safety and comfort applications, other applications, including optimization applications would ideally receive horizon data based on digital map data much further ahead, for example covering an entire route, or at least a significant portion thereof e.g. potentially over a range of tens to hundreds of kilometres.

### Summary of the invention

In accordance with a first aspect of the present invention there is provided a method of providing Advanced Driver Assistance System (ADAS) horizon data to a client ADAS application of a vehicle, comprising;
obtaining an ADAS horizon indicative of one or more possible paths that the vehicle may travel in the future through a portion of a road network, and, for each possible path, data indicative of one or more attributes associated with the path, wherein the one or more possible paths include a main path on which a current position of the vehicle lies;
and providing horizon data to the client ADAS application relating to at least the main path of the ADAS horizon, wherein providing the horizon data to the client ADAS application relating to the main path comprises, for each of one or more attributes associated with the main path, generating one or more profile messages indicative of a profile of the attribute along the main path, each profile message being indicative of a value of the attribute associated with a respective given location along the main path, and transmitting each message to the client ADAS application;

the method comprising, for at least one attribute associated with the main path:
generating a plurality of profile messages and transmitting the profile messages to the client ADAS application, wherein each profile message comprises attribute data indicative of a value of the attribute associated with a respective given location along the main path and offset data indicative of an offset along the main path defining the given location;
wherein when an offset of the given location from a reference origin is no greater than an offset threshold, the profile message offset is defined relative to the reference origin and, when the offset of the given location from the reference origin exceeds the offset threshold, the profile message offset is defined relative to an integer multiple of the offset threshold along the main path;
wherein the profile messages in respect of a given attribute are transmitted to the client ADAS application in order of offset of the given locations to which the profile messages relate from the reference origin, including when the offset from the reference origin exceeds the offset threshold;
wherein the given locations along the main path in respect of which profile messages are generated and transmitted for the given attribute include locations at which a change in the value of the attribute occurs, and wherein the method comprises further generating and transmitting at least one additional profile message in respect of the given attribute, each additional profile message being in respect of a given location at which there is no change in the value of the attribute to assist in use of the horizon data by the client ADAS application.

As will be discussed in more detail below, in accordance with the present invention, a method of providing ADAS horizon data to a client ADAS application (sometimes referred to as a "client application" for brevity herein) is provided in which, for at least one attribute associated with a main path of the horizon, a plurality of profile messages are generated and transmitted to the client ADAS application. Each profile message is indicative of a value of the attribute for a respective given location along the main path. This is done in a way which is compatible with the principles of existing protocols for providing horizon data, in particular ADASISv2, but in a way which supports the provision of a longer vehicle horizon i.e. with profile messages being generated and transmitted in respect of locations further from a current position of the vehicle.

Each profile message is indicative of an offset along the main path defining the given location to which the attribute value relates. This offset is expressed in terms of an offset from a reference origin - which may for instance be the origin of the main path or a position defined based on a position of the vehicle at the time the horizon is generated- up to an offset threshold from the reference origin. However, when the offset exceeds the offset threshold, the offset is instead defined relative to an integer multiple of the offset threshold along the main path. The offset threshold is a predefined maximum offset and is typically limited by the protocol governing provision of the horizon data e.g. ADASISv2. For example, in the case of ADASISv2, this is limited by the number of bits available to transmit profile messages, which provides an available offset of 8190. As will be described in more detail below, rather than decrease a resolution of the offset, instead, by defining the offset relative to an integer multiple of the offset threshold once the threshold has been exceeded, the offset effectively wrapsaround, allowing profile messages to specify locations far greater than the offset threshold, and indeed several multiples thereof, without needing to decrease the offset resolution. However, as discussed below, it may still be desirable to decrease the resolution in some cases depending upon factors such as the desired balance of the amount of data to be processed/transmitted and the accuracy of the data, and the overall length of the horizon to be provided. The wrapping around of the offset enables a longer horizon to be provided for a given resolution.

The Applicant has further recognised that this technique may lead to complications when the client ADAS application attempts to reconstruct the horizon. For example, profile messages relating to locations along the main path separated by integer multiples of the offset threshold distance would appear to relate to the same offset from the reference origin e.g. origin of the main path (since the offset for the locations beyond the offset threshold is specified with respect to an integer multiple of the offset threshold).

To assist the client ADAS application in deciphering the horizon data, additional steps are taken. The profile messages in respect of the given attribute are transmitted in order of offset of the given locations to which they relate from the reference origin e.g. origin of the main path. Thus, even if the offset associated with a particular message appears to decrease relative to a preceding one (due to an offset threshold or integer multiple thereof being crossed), the client ADAS application can understand that the offset has in fact increased. The applicant has further recognised that in some cases, particularly where profile messages associated with locations having actual offsets from the reference origin e.g. origin of the main path exceeding more than one multiple of the offset threshold are present, it may still be difficult to determine the actual offset associated with a message. This may be the case in particular where successive messages are associated with locations separated by more than the offset threshold. Thus, profile messages are generated and transmitted not only in respect of locations at which a change in value of the attribute occurs, but also for one or more additional locations to assist in use of the horizon data by the client ADAS application. At least one additional profile message is generated and transmitted in respect of a given location at which there is no change in the value of the attribute. In this way, if there is no change in the value of the attribute over a distance exceeding the offset threshold, it is still possible to determine what the actual offset associated with a message should be relative to the reference origin e.g. origin of the main path, since the sequential transmission of the messages and the provision of additional message(s) means that the client ADAS application can more readily determine when an offset wraparound occurs, and if so, whether this is a single offset wraparound or a multiple wraparound.

The methods of the invention in accordance with the various aspects described herein are computer implemented.

In accordance with the invention, the horizon data that is provided to the client ADAS application is horizon data that may be used by the client ADAS application in reconstructing the vehicle horizon on the client side.

As used herein, the term "ADAS horizon" or "ADAS horizon data" refers to a vehicle driving horizon for use by a client ADAS application of a vehicle or to data indicative of such a horizon. The ADAS may be in respect of any level of automation and encompasses so-called Automated Driving Application System (ADS). The horizon is an electronic horizon.

The methods described herein may be used to provide ADAS horizon data to one or more client ADAS applications of a vehicle. While the methods will be exemplified by reference to providing ADAS horizon data to a client ADAS application of a vehicle, it will be appreciated that a vehicle may comprise multiple client ADAS applications. In such a case, ADAS horizon data may be provided to any one or ones or each of the client ADAS applications using the methods described herein. Horizon data may be provided to a particular client ADAS application comprising data indicative of one or more attributes relevant to that ADAS application, or horizon data may be generally generated and transmitted to the multiple client ADAS applications in respect of multiple attributes, with individual client ADAS applications then filtering the data e.g. by attribute to obtain the horizon data relevant to their needs.

Advantageously the client ADAS application is an application performing optimization functions in relation to the travel of the vehicle along the main path. Optimization functions include functions such as battery conservation, gear selection or fuel conservation. Examples of uses of the horizon data by a client ADAS application are described below.

The methods of the present invention may be implemented by any suitable subsystem. In embodiments, the methods are performed by a horizon providing subsystem.

In accordance with a further aspect of the invention there is provided a horizon providing subsystem configured to provide ADAS horizon data to a client ADAS application of a vehicle, the horizon providing subsystem being configured to perform a method in accordance with any of the aspects or embodiments herein described.

The horizon providing subsystem in accordance with this further aspect may include any or all of the features and/or be configured to perform a method in accordance with any of the other aspects or embodiments of providing horizon data described herein.

In accordance with these further aspects and embodiments relating to a horizon providing subsystem, the horizon providing subsystem may be a vehicle subsystem. Thus, the methods of providing ADAS horizon data described herein may be performed on board the vehicle. However, it is envisaged that at least some of the steps may alternatively be performed by a server.

The method further comprises the client ADAS application receiving the transmitted horizon data and using the data to reconstruct the vehicle horizon.

The present invention extends to a method comprising a horizon providing subsystem providing ADAS horizon data to a client ADAS application of a vehicle using a method in accordance with any of the embodiments herein described, the method further comprising the client ADAS application receiving the transmitted horizon data and using the received horizon data. The client ADAS application may use the received horizon data in accordance with any of the methods described herein. The client ADAS application may use the received horizon data to, for example, reconstruct the vehicle horizon and/or optimize functions of the vehicle as it travels along the main path.

The method in accordance with this further aspect may include any or all of the features described with respect to any of the other aspects or embodiments described herein. Thus, the horizon providing subsystem may provide the horizon data in accordance with any of the methods herein described.

The present invention further extends to a system comprising a horizon providing subsystem configured to provide ADAS horizon data to a client ADAS application of a vehicle using a method in accordance with any of the embodiments herein described, and a client ADAS application configured to receive and use the transmitted horizon data, for example to reconstruct the vehicle horizon and/or optimize functions of the vehicle as it travels along the main path.

The system in accordance with this further aspect may include any or all of the features described with respect to any of the other aspects or embodiments described herein. Thus, the horizon providing subsystem may provide the horizon data in accordance with any of the methods herein described, and the client ADAS application may operate in any of the manners herein described.

In accordance with the invention in any of its aspects or embodiments, the method of providing ADAS horizon data involves obtaining an ADAS horizon. This step may or may not involve generating the ADAS horizon. For example, in some exemplary embodiments, a vehicle horizon providing subsystem on board the vehicle which performs the method of providing the ADAS horizon data to the client ADAS application may obtain ADAS horizon data from an ADAS horizon generating subsystem which generates the ADAS horizon. The ADAS horizon generating subsystem may be a vehicle subsystem i.e. the ADAS horizon may be generated on board the vehicle. However, in other embodiments the ADAS horizon generating subsystem may be provided, at least in part, off board the vehicle. For example, at least some of the steps involved in generating the ADAS horizon may be performed by a server.

The horizon data is based on digital map data. Thus the horizon data is generated using digital map data. The horizon data itself may comprise digital map data or data otherwise based on digital map data, for example obtained by appropriate processing of the digital map data. The horizon data is based at least in part on digital map data, and may also be based on other additional sources of data. For example the horizon data is typically based on digital map data and vehicle position data, and may also be based on other data such as vehicle sensor data. Wherever the horizon data is generated i.e. whether this is performed on board the vehicle or otherwise, in exemplary embodiments the digital map data upon which the horizon data is based may be stored on a server i.e. in the cloud.

However it is obtained, the vehicle horizon comprises data indicative of one or more possible paths that the vehicle may travel (in the future) through a portion of a road network.

A possible path is any trajectory that the vehicle may travel in the future. A path may be a planned path e.g. forming part of a pre-planned route, or may be a predicted path. The horizon comprises data indicative of the or each possible path and data indictive of one or more attributes of the or each possible path. This may allow data about an upcoming portion of the road network to be obtained in advance before the vehicle reaches the relevant portion, to enable the ADAS application to function.

Each possible path may be obtained using any suitable technique, for example as described in TomTom International B.V's WO 2014/068094A1 entitled "Methods and Systems for Generating A Horizon for Use In an Advanced Driver Assistance System (ADAS)", filed on 1 November 2013.

The road network comprises a plurality of road segments connected by nodes (i.e. decision points) and is represented by digital map data indicative of each road segment and node i.e. decision point. The horizon data indicative of a possible path through the road network comprises data indicative of a sequence of one or more segments of the digital map defining the possible path. The horizon data may define a path using a path identifier e.g. as set out in ADASISv2 or as described in WO 2014/068094A1.

The one or more possible paths include a main path of the vehicle. The main path of the vehicle is a most probable path (MPP) of the vehicle i.e. the most likely path that will be taken by the vehicle in the future from the current position of the vehicle. The MPP is a path on which a current position of the vehicle lies. The terms "MPP" and "main path" may be used interchangeably herein. The main path may comprise a predicted path and/or a planned path e.g. forming part of a pre-planned route. Thus the main path may consist of a predicted path or a pre-planned path or may comprise both predicted path and planned path portions. When the current location of a vehicle nears a destination of a pre-planned path, the horizon may, in some embodiments, extend beyond the destination along a predicted path such that the horizon includes both planned and predicted path portions.

The horizon may also comprise data indicative of one or more first-level sub paths and optionally one or more higher level sub-paths. A first-level sub path is a path onto which the vehicle may turn from the main path. A first-level sub path will be a less likely alternative to the main path on which the vehicle may continue driving. A second order sub-path is a path onto which a vehicle may turn from a first-level sub-path and so on. The horizon may comprise data indicative of the relative probability that each of a plurality of possible paths may be taken by the vehicle at a decision point.

The main path, and indeed each possible path of the vehicle horizon may be identified in the vehicle horizon by a path identifier. The relationships between the possible paths may be defined by stubs in the vehicle horizon. For example, where the horizon data comprises one or more sub-level path, a start of the sub-level path may be indicated by a stub with respect to the (parent) higher level path from which it originates e.g. of the main path where the path is a first level sub path. The location of a stub is defined by an offset with respect to an origin of the MPP or parent path. This is consistent with the ADASISv2 protocol.

The horizon further comprises data indicative of one or more attributes of the or each possible path. This may allow data about an upcoming portion of the road network to be obtained in advance before the vehicle reaches the relevant portion, to enable an ADAS application to perform its function.

The horizon data provided to the client ADAS application in accordance with the methods disclosed herein relates to attribute(s) of at least the main path of the ADAS horizon. The horizon data provided to the client ADAS application may also comprise data relating to attribute(s) of one or more first-level sub paths and optionally one or more higher level sub-paths. The extent and/or level of sub-level paths in respect of which attribute data is included in the horizon data provided to the client ADAS application may be set as appropriate for a particular ADAS application.

It may be sufficient to include only data relating to the MPP in the horizon data transmitted to the client ADAS application. This may have the consequence that there may be a short period in which the client ADAS application cannot function should the vehicle leave the MPP until a new MPP is determined i.e. the application is left "blind". Depending upon the application this may be acceptable, and it may be preferred to limit the amount of horizon data to be provided. In other contexts, it may be more important to include a fuller set of horizon data including sub-level paths, enabling the vehicle to be immediately located with respect to another path (which then becomes a new main path/MPP), should it leave the current main path/MPP. Where horizon data relating to sub-level paths is provided to the client ADAS application, such data may be provided in the same manner as described herein in relation to the provision of horizon data relating to the main path of the ADAS horizon.

The methods of providing horizon data to the client ADAS application described herein are performed at least in relation to the main path (MPP) of the vehicle. It will be appreciated that where horizon data relating to only a main path of the vehicle is provided to a client ADAS application in accordance with the methods disclosed herein, the obtained horizon may or may not comprise data relating to other possible paths. The horizon data obtained may be a fuller set of data including sub level path type data to support the provision of such data to a client ADAS application if required in certain contexts.

The present invention relates to the way in which ADAS horizon data is provided to a client ADAS application of a vehicle. The methods described herein may thus be implemented using a protocol governing the provision of horizon data from a horizon provider subsystem to a client ADAS application of a vehicle e.g. to a horizon reconstructor subsystem of the client ADAS application. In some exemplary embodiments, the methods of the present invention are implemented using an ADASIS protocol, for example the ADASISv2 protocol. The techniques described herein may be implemented by suitably modifying/extending the operation of an existing ADASIS protocol e.g. ADASISv2. While reference may be made to ADASIS protocols, in particular ADASISv2, it will be appreciated that the techniques described herein are more widely applicable to any current or future protocol (or version of the ADASISv2 protocol), or may be implemented using a dedicated protocol. However, advantageously the methods are implemented by modification of an existing protocol, such as ADASISv2, providing a convenient way to enhance such a protocol with additional functionality, in particular allowing the delivery of longer horizons. The ADASISv2 protocol may be found at https://adasis.org/specification/. While there have been different versions of the ADASISv2 protocol over time, each updated version is compatible with the preceding versions. The techniques described herein may be implemented in relation to any version of the ADASISv2 protocol.

In accordance with the invention, the step of providing horizon data to the client ADAS application relating to the main path comprises generating one or more profile messages indicative of a profile of an attribute along the main path and transmitting the one or more profile messages to the client ADAS application. A set of one or more profile messages are generated for each of one or more attributes associated with the main path.

An attribute of a path is indicative of one or more property of the path. The property of the path represents a property of the road network through which the path is defined. The property can be of the path itself or relate to a feature associated with the path. For example, a property may be indicative of curvature or slope of the path, or may indicate a feature associated with the path, such as the presence of traffic signal, tunnel or bridge. As discussed above the horizon data that is obtained includes attribute data, which may be derived from digital map data or other sources, such as route information or an online source. The property of the path may represent a property of the one or more road segments defining the path in the digital map.

An attribute for which profile messages are generated in accordance with the invention can be indicative of a single property of the path or may be indicative of a set of properties. For example, a "segment" attribute may be defined, which is indicative of a set of common properties relating to a segment, such as speed limit, form of way, number of lanes etc. In either case, a profile message in respect of the attribute is indicative of a value of the one or more properties at a location along the main path. Thus, where the attribute is indicative of a set of multiple properties, a profile message will be indicative of the values of each of these properties for a given location along the path.

A profile of an attribute provides a representation of the attribute with respect to distance along a path. The profile of an attribute thus describes the development of the attribute along the path. The profile may be indicative of a variation of the attribute along the path. The path profile messages for a given attribute are indicative of values of the attribute at different locations along the path. The set of one or more profile messages in respect of a given attribute are indicative of the profile of the attribute along the path. Each profile message is indicative of a value of the attribute associated with a respective given location along the main path.

Depending upon the type of attribute, it is envisaged that a single profile message might be generated e.g. where the attribute is a route information attribute for a pre-planned route. A profile message may then be generated indicative of a destination of the pre-planned route. Such embodiments are described in more detail below. However, for at least one attribute associated with the main path, a plurality of profile messages are generated and transmitted in accordance with the methods herein described. Thus, where profile messages are generated in respect of multiple attributes, for at least a subset of the attributes, a plurality of profile messages are generated and transmitted. Where a set of multiple profile messages is generated and transmitted for a given attribute, the path profile messages for the given attribute are thus indicative of a development of the attribute with distance along the path.

The data indicative of the value of the attribute at a given location along the main path provided by a profile message provides a profile "spot" for that location. The value of an attribute associated with a given location along the path may be directly or indirectly indicative of the value of the attribute at the given location. The data indicative of the value of the attribute provided by the profile message may be a single value, or may be a set of values to be used in a function enabling the value of the attribute at the location to be obtained and/or may be representative of a function enabling the value of the attribute to be obtained. For example, the data indicative of the value of the attribute may be a vector, defining parameters necessary to obtain a value for the profile attribute at the given location. In exemplary embodiments a vector may be indicative of first or second order derivatives, or longitude and latitude coordinates for use in determining a value of the attribute. The data indicative of the value may be indicative of a quantitative description of the attribute at the given location or may indicate the presence of the attribute in a binary manner e.g. indicating presence of traffic signal, tunnel etc. Where the attribute denotes a set of multiple properties of the path, the data indicative of a value of the attribute at a given location will be indicative of values for each property forming part of the attribute e.g. for a segment profile.

The generation of profile messages indicative of the profile of an attribute along the main path and their transmission to the client ADAS application means that the methods of the present invention may be implemented by suitable modification of the ADASISv2 protocol, which involves generating and transmitting path profile messages to a client ADAS application.

In accordance with the ADASISv2 protocol, vehicle horizon data is provided to a client ADAS application of a vehicle using 64-bit messages. The messages include position messages, meta data messages and path profile messages.

In accordance with the invention, in addition to the profile messages that are generated and transmitted to the client ADAS application, providing horizon data to the client ADAS application may further comprise generating and transmitting position messages indicative of a current position of the vehicle on the main path to the client ADAS application and/or generating and transmitting one or more metadata message to the client ADAS application.

A metadata message is indicative of properties of a region in which the vehicle is currently located. For example, a metadata message may indicate the country in which the vehicle is located.

A position message is indicative of the current position of the vehicle on a path of the horizon. The position may be defined in terms of an offset from an origin of the path. The path may be identified by a path identifier. Such position messages may be generated on board the vehicle. A position message may translate a position according to a positioning system of the vehicle into a position with respect to a path of the vehicle horizon. For example, an absolute GNSS location of the vehicle may be translated to a relative, map-matched position on a path.

A metadata message may be indicative of digital map information relating to the region in which the vehicle is located. Metadata messages are representative of data that does not change often, and thus metadata messages may be transmitted with a lesser frequency than profile messages or positions messages e.g. every 30 seconds. In contrast, position messages would be generated and transmitted more frequently, for example with a frequency in the order of 1Hz.

Each profile message may comprise data indicative of the attribute and data indicative of the path to which the profile message relates. In accordance with the invention, profile messages are generated and transmitted at least for the main path of the ADAS horizon. The data indicative of the main path (or any other path included in the horizon) may be indicative of the path in any suitable manner. Typically the path is indicated by means of a path identifier. This may avoid the need to transmit map data to the client ADAS application. Paths of the vehicle horizon may be defined implicitly through a combination of paths, stubs and attribute profiles.

The main path, and indeed each possible path of the vehicle horizon may be identified in the vehicle horizon by a path identifier. The relationships between the possible paths may be defined by stubs in the vehicle horizon. For example, where the horizon data comprises one or more sub-level path, a start of the sub-level path may be indicated by a stub with respect to the (parent) higher level path from which it originates e.g. of the main path where the path is a first level sub path. The location of a stub is defined by an offset with respect to an origin of the MPP or parent path. This is consistent with the ADASISv2 protocol.

The path profile data received may enable the client ADAS application to derive a value for the attribute at any point along the path. For example, the application may perform interpolation to determine values for the attribute intermediate locations for which attribute values are provided in the path profile data i.e. for which path profile messages (i.e. profile spots) are provided. A profile message may include information as to how to interpolate between values at successive given locations. In a simple case, a step profile may be used, such that an attribute value for a given location is considered to remain applicable until the next location for which a profile message is provided. In other cases, a linear or higher order interpolation type may be used to obtain values for the attribute between profile spots i.e. locations for which profile messages are provided. For example, the profile message may comprise an indication that a step profile, or higher order function interpolation type e.g. linear or binomial etc should be used. Such interpolation type information can be included in an "attribute type" field associated with the profile message. This is consistent with the ADASISv2 protocol. In such a protocol, different forms of attribute type may be assigned to profile messages relating to the same attribute i.e. representing the same one or more properties of the path, but where different interpolation should be used e.g. step versus linear. However, other arrangements may be used to indicate how to derive values for an attribute between profile spots.

It is also necessary to define the location along the main path to which the message relates. For at least one attribute associated with the main path, the present invention involves a generating a plurality of profile messages, each of which includes offset data indicative of an offset along the main path defining a given location to which the profile message relates (i.e. to which the attribute value of the profile message relates), with the offset being defined in a particular manner. The offset of the given location to which a profile message relates may interchangeably be referred to as an offset of the profile message or "profile message offset". While the attribute value and path data associated with a profile message in accordance with the invention may be provided in accordance with the ADASISv2 protocol, the way in which the offset information associated with profile messages is defined differs from the techniques used in the ADASISv2 protocol, and solves certain problems the Applicant has identified associated with those techniques.

When an offset of the given location from a reference origin e.g. an origin of the main path is no greater than an offset threshold as measured from the reference origin e.g. origin of the main path, the profile message offset is defined relative to i.e. with respect to the reference origin e.g. the origin of the main path. In this case, the profile message offset is defined in terms of an offset from the reference origin. However, when the offset of the given location from the reference origin e.g. origin of the main path exceeds the offset threshold, the profile message offset is defined relative to an integer multiple of the offset threshold. Thus, rather than being defined as an offset from the reference origin, the profile message offset is defined relative to a predefined offset threshold or an integer multiple thereof. The predefined offset threshold is itself located at some distance along the main path from the reference origin.

The reference origin is typically an origin of the main path. Embodiments of the invention will be described by reference to the case in which the reference origin is the origin of the main path. However, it will be appreciated that the reference origin can be any other suitable reference origin associated with the main path. For example, the reference origin may be a position determined based on a position of the vehicle at the time the horizon is generated, such as the position of the vehicle or a position a given distance behind the position of the vehicle. Whatever reference origin is used, the reference origin is a fixed origin. The reference origin remains fixed throughout the performing of the methods as described herein.

The reference origin is a location on the main path, whether defining the origin of the path or at some distance along the path from the origin thereof. The offset threshold is located at a distance from the reference origin along the main path. The offset threshold is located at a distance from the origin of the main path along the main path. Where the reference origin is not the origin of the main path, the offset threshold is also located at a distance along the main path from the reference origin.

The offset threshold is a predefined offset threshold as defined relative to the reference origin e.g. origin of the main path. The offset threshold corresponds to a predefined maximum offset from the reference origin e.g. origin of the path. The predefined maximum offset is a predefined maximum available offset. The offset threshold (or predefined maximum offset) may be set by the protocol used to transmit the profile messages. The offset threshold may be set by the available bits according to the protocol that are available to transmit offset information. For example, in embodiments, the offset threshold is set by the ADASISv2 protocol. In such cases, the available offset is 8190 (in offset units). This is set by the 13 bits which are available to transmit offset information.

In this way, when the offset of a particular profile "spot"/given location for which a profile message is provided exceeds the offset threshold i.e. a predefined maximum available offset, a profile message relating to that given location may still be generated and transmitted, by defining the given location in terms of an offset from the offset threshold or an integer multiple thereof rather than with respect to the reference origin e.g. origin of the main path. The offset threshold and any integer multiple thereof are themselves defined relative to the reference origin. In the context of the present invention, an integer refers to a positive integer i.e. a whole number greater than zero. The offset will be defined relative to the largest preceding integer multiple of the offset threshold.

The profile message offset of the given location from the reference origin e.g. origin of the main path may be defined by a MODULO operation on the offset of the given location from the reference origin e.g. origin of the main path, based on the offset threshold. A profile message offset may be given by the equation;
profile message offset = offset of given location to which profile message relates from reference origin (e.g. origin of main path) MODULO offset threshold (equation 1).

For the case in which the offset threshold is 8190 (as set by the ADASISv2 protocol), profile message offset = offset of given location to which message relates from reference origin (e.g. origin of main path) MODULO 8190.

In this way, the profile message offsets associated with profile messages effectively wraparound, once the offset relative to the reference origin e.g. origin of the main path exceeds the offset threshold. The profile message offset reverts to zero each time an integer multiple of the offset threshold is passed. This enables profile messages to be transmitted in respect of longer horizons while avoiding the need to instead decrease a resolution of the offset to provide profile messages in respect of locations further ahead of a current position of the vehicle. It is advantageous to avoid decreasing the resolution of the offset, since this may lead to details of the profile of an attribute along the path being lost.

The offset, whether measured relative to the reference origin e.g. origin of the main path or an offset threshold (or integer multiple thereof), is defined in offset units. Each offset unit represents a unit length along the main path. This is the offset resolution. For example, the offset unit length i.e. resolution may be set as 1m. The way in which the offset resolution may be defined is described in more detail below. In general the offset resolution is a predetermined value setting the offset unit length which applies to all profile messages generated and transmitted.

For example, assuming an offset threshold of 8190 offset units as set by the ADASISv2 protocol, if an offset unit is taken to represent 1m, i.e. such that the offset resolution is 1m, this would allow an offset to be defined relative to a reference origin e.g. an origin of the path for offsets of up to a distance of 8190m or roughly 8km along the path, before the offset threshold is reached. However, if it is desired to provide profile messages for a greater distance ahead i.e. to support a longer horizon for the client ADAS application, an offset unit might instead by taken to represent 10m (i.e. the offset resolution may be 10m), resulting in an available offset relative to the reference origin e.g. origin of the path of up to 81900m or roughly 80km. However, decreasing offset resolution in this way risks losing detail in the variation of an attribute. Each profile "spot" would need to convey a value for the attribute covering the entire resolution unit. This may necessitate determining some form of average value for quantitatively defined attributes. For example, where a linear interpolation is used, precision will be lost since some representative value of the attribute assumed valid over the entire resolution unit must be derived. Where the attribute value is of a binary nature representing the presence of an object e.g. traffic sign, precision may be lost as to the exact location of the object. For example, any traffic signs present within the resolution distance would appear to be associated with the same given location i.e. profile spot. Where a step profile is used, having values which change within the distance defined by an offset unit for a particular resolution, this detail will be entirely lost, with some representative value for the attribute covering the entire offset unit instead needing to be provided.

It will be appreciated that while the wrapping around of offsets associated with profile messages may help to address concerns associated with otherwise needing to decrease the resolution of the offset, this can lead to complications when the client ADAS application attempts to reconstruct the horizon using the messages. In particular, it may be difficult for the client ADAS application to determine the actual offset relative to the reference origin e.g. an origin of the main path associated with a particular message.

In accordance with the present invention, additional measures are taken to ensure that while offset wraparound may be used to support longer horizons, this is not detrimental to the ability of the client ADAS application to determine the offset relative to the origin of the main path using the received profile messages e.g. to reconstruct the horizon.

A first measure involves, for the profile messages transmitted in respect of a given attribute, transmitting the profile messages in order of offset of the given locations to which they relate from the reference origin e.g. origin of the main path. This is the case even where the offset from the reference origin e.g. origin of the main path exceeds the offset threshold i.e. when offset "wraparound" is used, such that the offset for the message is defined relative to an integer multiple of the offset threshold along the main path rather than as an offset from the reference origin e.g. origin of the path. In this way, the profile messages, for a given attribute, are transmitted in order of non-decreasing offset from the reference origin e.g. origin of the main path. Typically the profile messages will be both generated and transmitted in such an order of offset of the given locations to which they relate from the reference origin e.g. origin of the path, although it is envisaged that generation of profile messages in respect of a given attribute for different locations along the path could occur at least in part in parallel.

Where the offset of a profile message is defined relative to an integer multiple of the offset threshold i.e. where the offset threshold is exceeded, this may be seen as an "adjusted offset". The offset from the reference origin e.g. origin of the main path may be considered as the actual offset of a location along the path (within the context of the horizon). Where the offset threshold is exceeded, this is the original offset of the location prior to the adjustment to redefine the offset relative to the offset threshold or an integer multiple thereof. The offset relative to the reference origin e.g. origin of the path may be considered as an "absolute" offset within the terms of reference of the horizon. The offset is the actual (or absolute) offset relative to the reference origin e.g. origin of the path of the horizon. The origin of the path may be defined by a time of generation of the horizon. The offset of a given location to which a profile message relates from the reference origin e.g. origin of the main path is a position along the path, defined by its distance from the reference origin e.g. path origin, and may be measured as an arc or poly-line length along the path.

The steps of generating the profile messages, using offset wraparound to provide the profile message offset where an offset of a location associated with a message from an origin of the path exceeds an offset threshold or integer multiple thereof, and transmitting the profile messages in order of offset of the respective locations from the reference origin e.g. origin of the path are performed in respect of at least one attribute. The transmitting of the profile messages in order of offset of the locations to which they relate along the path is performed for those messages in respect of the or each given attribute of the at least one attribute. Where such steps are performed for multiple attributes, it will be appreciated that the transition of the profile messages in order of offset of the locations to which they relate along the path occurs for those messages in respect of each given attribute. In such cases, it is envisaged that generation of profile messages in respect of different attributes may occur in parallel.

The transmission of the profile messages in order of offset of the given locations from the reference origin e.g. origin of the path ensures that the client ADAS application can readily reconstruct the horizon using the messages even where the offset threshold has been exceeded. In such cases, due to offset wraparound, messages associated with positions separated by the offset threshold e.g. 8190m would each be associated with the same offset value. The transmission of the messages in order of increasing offset from the reference origin e.g. origin of the main path assists the client ADAS application in determining when a wraparound has occurred, such that determining the actual offset relative to the reference origin e.g. origin of the main path involves adding some integer multiple of the offset threshold e.g. 8190m.

The method may extend to the client ADAS application receiving a sequence of profile messages in respect of an attribute including a profile message in which the profile message offset exceeds the offset threshold and determining an offset of the location to which the profile message relates relative to a reference origin e.g. an origin of the main path by reference to profile message offset values associated with one or more immediately preceding profile messages in the sequence of profile messages received in respect of the attribute.

A second measure involves generating and transmitting profile messages for a given attribute not only for locations along the main path at which a change in the value of the attribute occurs, but also generating and transmitting at least one additional profile message for the given attribute in respect of a location at which there is no change in the value of the attribute. Thus one or more additional messages are generated and transmitted which are not strictly necessary to convey data relating to a profile of the attribute, but which are generated and transmitted for the purpose of facilitating use of the horizon data by the client ADAS application. For example, this may facilitate the reconstruction of the vehicle horizon by the client ADAS application, enabling the client ADAS application to correctly reconstruct the location along the main path to which a particular profile message relates.

Profile messages according to conventional protocols e.g. ADASISv2 are transmitted in respect of locations at which a change in a value of an attribute occurs. This is intended to reduce the amount of data to be generated and transmitted to the client ADAS application. It is therefore counter intuitive to generate and transmit additional profile messages which are not strictly required in order to convey profile information to the client ADAS application. The Applicant has recognised that in the specific case where offset wraparound is used to support longer horizons without needing to decrease resolution of the offset, i.e. where profile messages are generated and transmitted in respect of locations having an offset from a reference origin e.g. an origin of the main path exceeding the offset threshold and provided with an "adjusted" offset with respect to the offset threshold or a multiple thereof as described herein, the generation and transmission of additional messages is helpful in enabling the client ADAS application to determine the offset associated with each profile message from the reference origin e.g. origin of the path e.g. for use in reconstructing the horizon. This is particularly the case where multiple wraparounds of the profile message offset occur. The additional messages may be referred to as "no-change" messages which indicate that there is no change in the value of the attribute at additional locations along the path.

The additional profile messages generated and transmitted are generated and transmitted in the same manner as the other "true" profile messages in respect of changes in attribute value. The additional messages form part of the overall sequence of profile messages generated and transmitted. The measure relating to transmitting profile messages in order of increasing offset from the reference origin e.g. origin of the main path therefore applies equally to the additional profile messages.

The generation and transmission of additional profile messages is particularly useful where a distance along the main path between locations at which successive changes in the value of an attribute occur exceeds the offset threshold. For example, assuming an offset along the path from the reference origin e.g. origin of the main path for a given location of 8190 offset units, and changes in attribute value at 600 and 20000 offset units with respect to the reference origin e.g. origin of the main path, the adjusted profile message offset in respect of the 20000 offset units location would be given by 20000MODULO8190, or 3620 offset units. Without intervening profile messages being transmitted, it is difficult for the client ADAS application to identify whether the actual offset for this location relative to the reference origin e.g. origin of the main path is 3620, or 8190+3620 or (8190x2)+3620 offset units. The additional messages may be transmitted for locations corresponding to an offset relative to the reference origin e.g. origin of the main path between 8190 and 2x8190, enabling the client ADAS application to better interpret that two wraparounds have occurred, and that the 3620 value corresponds to an offset of 20000 relative to the reference origin e.g. origin of the main path.

The method may comprise generating and transmitting at least one additional profile message when a pair of successive locations (for which profile messages are generated and transmitted for a given attribute) at which a change in the value of the attribute occurs are separated by a distance along the main path which exceeds the distance of the offset threshold from the reference origin e.g. origin of the main path (the "offset threshold distance"). It will be appreciated that here the relevant distance between the successive locations is a relative distance. The relative distance between the successive locations exceeds the offset threshold distance i.e. a number of offset units defining the offset threshold distance relative to the reference origin e.g. origin of the main path, but may be located anywhere along the main path e.g. spanning any integer multiples of the offset threshold.

The at least one additional profile message is generated and transmitted in respect of a given location between the pair of successive locations along the main path. The given location thus has an offset relative to the reference origin e.g. origin of the main path that is between the offsets of the pair of successive locations relative to the reference origin e.g. origin of the main path. The method may comprise generating and transmitting at least one additional profile message for a given attribute to ensure that a profile message in respect of the attribute is transmitted for at least one location along the main path within each successive integer multiple of the offset threshold distance present along the main path from the reference origin e.g. origin of the main path.

The profile messages for a given attribute extend up to a given length ahead of the current position of the vehicle ("maximum transmitted length"). The "maximum transmitted length may also be referred to as a "horizon length". The maximum transmitted length for an attribute may correspond to a globally set horizon length for all attributes, or, in some advantageous embodiments, may be set on an attribute by attribute basis as discussed below. The vehicle horizon is updated as the vehicles travels through the road network. Thus, the maximum transmitted length for an attribute defines a horizon window for the attribute which advances as the vehicle advances through the road network.

As a result of the way in which offsets associated with profile messages may be "wrapped around" in accordance with the invention, greater freedom is provided in the selection of a resolution for offset. While the techniques described herein may avoid the need to decrease resolution, it may still be advantageous to decrease resolution to some degree to allow the horizon to extend over a greater distance ahead of the current position of the vehicle. For any given horizon length, the techniques of the present invention (i.e. offset wraparound, ordered transmission of profile messages and transmission of additional profile messages) will enable profile data to be provided with a greater resolution than would be the case without the use of those techniques, while still enabling reliable reconstruction of the horizon by the client ADAS application. The offset resolution selected will be a balance between a desired level of detail in the profile data and the length of the horizon to be transmitted. Longer horizons may be advantageous for some client ADAS applications, particularly where optimization is to be performed. For example, some client ADAS applications use the horizon data to optimize travel along a planned route and would then desirably receive horizon data covering the entire route, or at least a significant portion of it. This may extend over tens to hundreds of kilometres. In contrast, comfort or safety applications may only require a horizon extending over a few hundred meters, or at least within a few kilometres to perform their functionality. Increasing the length of the horizon may be advantageous in relation to the transmission of segment data, enabling such data to be provided in relation to much greater distances ahead of the current position. As mentioned above, segment data includes important road property data, such as speed limit, form of way, number of lanes etc.

In some embodiments, the offset along the main path is defined using a predetermined offset resolution based on the offset threshold and a desired distance the offset threshold is to represent, wherein the offset resolution is in the range of from 10m to 150m, such as from 15m-30m, for example 25m. Where the offset resolution is within such ranges, the client ADAS application may advantageously be an optimization application. Using a resolution in these ranges may further support the longer horizons supported by the methods disclosed herein, providing a balance between being able to exploit such longer horizons and avoiding undesirable reduction in accuracy of the information communicated by the profile messages.

As explained previously, the offset threshold may be set by the protocol governing provision of the horizon data to the client ADAS application. The resolution is given by;$Resolution = distance offset threshold to represent / offset threshold$ (equation 2)

The offset threshold is measured in offset units from the reference origin e.g. origin of the main path, and is dimensionless. The resolution will be in corresponding units to the distance the offset threshold is to represent e.g. m. The resolution defines the unit length for an offset unit.

Taking the example where the offset threshold is 8190 offset units as set by ADASISv2, it can then be determined what distance ahead of the current position this is desired to represent e.g. 200km. The offset resolution is then given by equation 2. In this example, that would be 200000m/8190, giving a resolution unit of approximately 25m.

Selecting a value for offset resolution in these ranges has been found to provide an optimal balance between allowing optimization functionality to be performed by the client ADAS application using the horizon data and avoiding degrading of the map accuracy available to the client ADAS application using the offset data e.g. in reconstructing the horizon. The offset resolution governs all measures of offset including the offset threshold and an offset whether defined with respect to the offset threshold or a reference origin e.g. an origin of the path as referred to herein.

An offset resolution may be configured in advance, and/or may be communicated to the client ADAS application in any suitable way. The offset resolution may be a global preset setting, applicable to all paths and attributes. In such cases, the offset resolution may be configured so that it is known to the client ADAS application(s) without the need to communicate it thereto. However, in some cases, for example where the offset resolution is more configurable e.g. per attribute and/or route, or even in some cases where it is a globally preset setting, it may be desirable to communicate the offset resolution to the client ADAS application(s). The offset resolution may be communicated to the client ADAS application, for example, using a global application state message, which may be a metadata or other custom message type for this purpose. Any arrangement may be used which enables the client ADAS application to know the resolution that it is to be used when determining offsets using the received horizon data.

The profile messages may be generated with the offset representing offset distances according to the resolution i.e. in the appropriate units such as m or km, or may be generated in terms of dimensionless offset units, with the client ADAS application using data indicative of the resolution i.e. offset unit length, however obtained, to convert these into distances.

The method of the present invention involves providing horizon data to the client ADAS application relating to at least the main path of the ADAS horizon, wherein providing the horizon data to the client ADAS application relating to the main path comprises, for each of one or more attributes associated with the main path, generating one or more profile messages indicative of a profile of the attribute along the main path, each profile message being indicative of a value of the attribute associated with a respective given location along the main path, and transmitting each message to the client ADAS application. For at least one attribute, a plurality of profile messages are generated and transmitted in accordance with the techniques described herein i.e. using the wraparound concept, ordered transmission and additional messages. Such an attribute in respect of which a plurality of profile messages are generated and transmitted would be an attribute of a type in respect of which multiple messages are generated and transmitted i.e. where there are multiple messages relating to the same attribute. Typically this would be where there is variation in the attribute along the main path. Where profile messages are generated and transmitted for a plurality of (different) attributes, these more specific steps may be performed for a subset of the attributes. Thus, there may also be one or more attributes for which the generation and transmission of profile messages occurs in a different manner, or for which only a single profile message is generated and transmitted.

Considering the way in which profile messages are generated and transmitted in general, for any attribute for which one or more such messages are generated and transmitted, and not only those for which the specific steps are performed, one or more additional steps may be taken to facilitate use of the horizon data by client ADAS applications, and in particular to support the provision of horizon data in respect of longer distances ahead of a current position of the vehicle.

The method may comprise, for each of the one or more attributes for which horizon data is provided, whether or not using the specific techniques relating to the generation and transmission of profile messages, transmitting the one or more profile messages associated with given locations along the main path up to a respective preset maximum transmitted length ahead of a current position along the main path. This preset maximum transmitted length therefore advances as the current position of the vehicle advances along the path, thus defining a horizon window. The actual transmitted length of the path ahead of the current position may vary depending upon the furthest attribute "event" ahead of the current position for which a profile message is generated i.e. the furthest point within the preset maximum transmitted length at which there is a change in attribute.

It has been recognised that the most suitable preset maximum transmitted length for a given attribute may vary between different attributes. Thus, in preferred embodiments, the preset maximum transmitted length is configurable to different lengths for different attributes. Thus the maximum transmitted length i.e. the horizon window may be set to different values for different attributes. In exemplary embodiments in which horizon data is provided for each of a plurality of different attributes, the method may comprise transmitting one or more profile messages associated with given locations along the main path in respect of first and second different attributes, wherein the one or more profile messages for each of the first and second different attributes are transmitted up to respective first and second preset maximum transmitted lengths, wherein the first and second preset maximum transmitted lengths are different.

The ability to customise a maximum length over which profile messages are transmitted for different attribute types is advantageous, enabling profile data to be transmitted up to an optimal length for different attributes. This allows a balance to be provided between ensuring a client ADAS application has sufficient profile data for a particular attribute to perform its function and avoiding overloading the client ADAS application with profile data, which may result in undesirable effects such as buffer overflow of a horizon reconstructor subsystem thereof. Limiting the maximum length may be advantageous in some contexts where the attribute is of a more dynamic nature, reducing the likelihood of outdated attribute data being transmitted and stored by the client ADAS application. Effectively the client ADAS application may cache the attribute values for a shorter distance ahead of the current position. In contrast, in accordance with the ADASISv2 protocol, profile data for each attribute is transmitted up to a globally set maximum transmitted length, defining a globally set horizon window length for all attributes.

In some embodiments the preset maximum transmitted length is configurable for at least one attribute up to an unlimited length along the main path ahead of the current position. This option would be appropriate for an attribute that is not open ended i.e. has a defined end point. One example of such an attribute is, as discussed below, a route information attribute for a pre-planned route indicative of a destination of the route. Another example might be an attribute indicative of a traffic jam. It will be appreciated that while it may be desirable for some attributes to have an unlimited maximum transmitted length, for many attributes a shorter maximum transmitted length would be more appropriate. For example, for other attributes it may be appropriate to configure the preset maximum transmitted length to a length which is within one offset wraparound range i.e. double an offset threshold.

In accordance with the invention, the maximum transmitted length for at least one given attribute in respect of which a plurality of profile messages are generated and transmitted exceeds the offset threshold, and preferably is greater than double the offset threshold. This enables the offset "wraparound" and supporting steps ("non-decreasing offset" and "additional profile messages") to be exploited.

It will be appreciated that the ability to set a maximum transmitted length for the profile data on a per attribute basis and/or up to an unlimited length is advantageous whether the main path the vehicle is following is part of a pre-planned route or not i.e. if the vehicle is free driving. In both cases these techniques assist in providing the client ADAS application with greater visibility of the path ahead, supporting e.g. optimization functionality. However, the techniques are particularly useful where there is a pre-planned route, as this means that the main path i.e. MPP may be assumed to be known for a longer distance ahead. The main path may be taken to correspond to the pre-planned route unless any deviation occurs. In contrast, when free driving, the main path i.e. MPP may change during travel, potentially quite frequently, where it is determined that the vehicle has deviated from the previously assumed MPP. This may then prompt the need to update profile messages e.g. regenerate and retransmit profile messages in respect of the main path ahead as the main path changes based on driver behaviour.

It has been recognised that it is desirable for the client ADAS application to receive data indicative of a length of a pre-planned route as part of the horizon data e.g. at the outset of travel along the route. The Applicant has recognised that this may be achieved by conveying route information relating to a length of the route using a route information attribute, and setting a preset maximum transmitted length for the route information attribute associated with the main path to be unlimited. In this way, a profile message indicative of a destination of the route will always be transmitted to the client ADAS application regardless of the length of the route. In other words, the length of the route will be available to the client ADAS application no matter how long the route, rather than falling outside of a horizon window at least initially during travel along the route. This helps support the ability to exploit longer horizons permitted by the methods disclosed herein i.e. relating to the way in which profile messages are generated.

In exemplary embodiments, the main path comprises a pre-planned route to a destination and the method further comprises providing data indicative of a length of the pre-planned route to the client ADAS application using a route information attribute associated with the main path, and setting the preset maximum transmitted length for the route information attribute to be unlimited to ensure that a profile message for the route information attribute indicative of a destination of the route is transmitted to the client ADAS application regardless of the length of the route.

Route information is therefore provided using an attribute in respect of which profile message(s) are generated and transmitted. The treatment of route information in this way enables the route length to be provided to the client ADAS application at the outset of travel along the route, regardless of its length, supporting optimization applications. For example, where a planned route spans over 600km, if the horizon length is set to 200km, the client ADAS application may not be able to adequately perform optimization e.g. in relation to fuel efficiency. Instead, since it does not know how long the route will be, it may need to take a conservative approach to optimization assuming the route may be of the greatest length possible. If, instead, it is aware of the actual route length at the outset, it can pursue more aggressive optimization. By providing the route length information using a dedicated attribute, the maximum length can be set specifically for that attribute, without needing to increase the maximum length for other attributes, which might undesirably increase the amount of data to be provided to the client ADAS application having an effect on bandwidth etc.

In those aspects of the invention extending to a client ADAS application receiving and using transmitted horizon data, the method may extend to the client ADAS application using received route information profile data indicative of the destination of the route to optimize functionality of the vehicle during travel along the route. The optimization may be in relation to factors such as fuel economy, gear selection, battery conservation, depending upon the nature of the vehicle.

The methods in accordance with the invention in any of its aspects and embodiments may comprise transmitting a profile message in respect of a route information attribute indicative of a length of the route regardless of the current location of the vehicle on the main path and the length of the route. Thus, the profile message may be transmitted when travel along the route commences.

The route information attribute may be directly or indirectly indicative of a length of the route. The route information attribute may be indicative of a destination of the route. By setting the preset maximum transmitted length for the route information attribute to unlimited, a profile message indicative of the length of the route will always be transmitted to the client ADAS application. In some embodiments the profile message indicative of a length of the route is indicative of a destination of the route. The message may be directly or indirectly indicative of the destination of the route. For example, the message may be generated in respect of a change in the route information attribute occurring at the end of the route, whether or not this explicitly identifies a destination. A change in the route information attribute would exist at this point since the route ends. The route information attribute may additionally be indicative of one or more waypoints of the route. Thus profile messages may be generated and transmitted in respect of such waypoints. However, it is envisaged that a single profile message in respect of the route information attribute might be generated and transmitted indicative of the length of the route e.g. a destination.

Where the main path is a pre-planned route, for each attribute, the preset maximum transmitted length ahead of the current position defines a respective horizon window for the attribute that moves along the route as the current position of the vehicle moves along the main path. When the preset maximum transmitted length reaches the destination, the method preferably comprises ceasing to generate and transmit profile messages for locations beyond the destination thereby capping the horizon window at the destination. It will be appreciated that while a pre-planned route may have an end point i.e. destination, unless steps are taken to the contrary, horizon data in respect of a main path i.e. MPP will continue to be generated for travel beyond the destination of the route while the vehicle is driving up to a horizon length. For example, this would occur using the ADASISv2 protocol. It has been recognised that unless the horizon window is capped, profile messages will continue to be generated and transmitted for locations along the main path beyond the destination up until the preset maximum transmitted length. This may result in unnecessarily large amounts of data being produced and transmitted, which undesirably consume computational resources of both the horizon provider and client ADAS application. Profile messages relating to locations beyond the destination are not useful to the client ADAS application. By capping the horizon window at the destination, the generation and transmission of unnecessary profile messages is supressed. This measure is particularly helpful in enabling longer horizons to be provided i.e. enabling the maximum transmitted length for an attribute to be set to a greater length, without incurring the undesirable effects in terms of unnecessary data generation and transmission.

In some embodiments the one or more attributes of the main path for which horizon data is provided include an attribute indicative of speed limit, and the method comprises using the same globally set speed unit when providing horizon data to the client ADAS application relating to values of the speed limit attribute associated with any location in the road network forming part of the horizon and regardless of the current location of the vehicle. Where the main path extends across a border between countries using different speed units, the method may comprise applying the same speed limit unit to profile messages generated and transmitted in respect of given locations on either side of the border and regardless of the current location of the vehicle.

This further feature may be particularly useful in the context of the techniques described herein, which support providing a longer vehicle horizon for an attribute e.g. speed limit. Over longer distances, a path e.g. pre-planned route or other predicted path, a vehicle may cross a border between countries using different speed units e.g. Northern Ireland and Republic of Ireland, or Canada and US. This could occur with a route of the order of 100km, for example. In accordance with the ADASIS v2 protocol, a speed unit may be set globally e.g. in a horizon metadata message. A speed limit is typically set by means of a segment attribute profile. However, this may necessitate recalculating horizon data e.g. segment profile data should a border to a country using a different speed limit unit be crossed. The horizon may be reset and regenerated, or existing segment profile values updated. Neither option is desirable, consuming computational resources.

Instead, the Applicant has realised that in practice it is unnecessary to recalculate horizon data if the speed unit is effectively preconfigured e.g. pinned, so that it remains the same regardless of the location of the vehicle, even if it crosses a border between jurisdictions using different units.

In some embodiments the one or more attributes of the main path for which horizon data is provided include an attribute indicative of speed limit, and the method comprises using the same globally set speed unit when providing horizon data to the client ADAS application relating to values of the speed limit attribute associated with any location in the road network forming part

In accordance with the invention, the speed unit may be set globally in the metadata of the horizon data e.g. in metadata messages of the horizon data. The speed unit may be configured in advance in accordance with user requirements. This is consistent with the approach taken in ADASISv2. However, in contrast to the ADASISv2 approach, no change in the globally set speed unit is made should a relevant border be crossed.

In order to support the use of the globally set speed unit, speed values for the speed limit attribute must be provided that are valid in the chosen speed unit for any location. According to the ADASISv2 protocol, speed values are provided in respect of a speed limit attribute e.g. as part of a segment attribute. Such speed values may be communicated in an applicable profile message for the attribute e.g. as part of a segment message. The speed values in respect of the speed limit attribute are provided without a speed unit, with the speed limit values being interpreted using the globally set speed unit.

It has been found that speed limits set in different units e.g. in mph or km/h may be taken to sufficiently correspond for many applications. For example, in a country using the mph system, a speed limit may be set to 30mph. In another country, a corresponding speed limit may be set at 50km/h. However, it has been recognised that for most purposes, it is sufficient to take the 50km/h limit as 30mph, even if strictly 50km/h= 31.0686mph. Thus, the speed values may all be defined with respect to the chosen speed unit even if that speed unit is not the speed unit in which the speed limit was originally set for a particular country.

The ADASISv2 protocol includes some functionality to address potential error situations or differences in synchronization in the transmission of horizon data between a horizon providing subsystem and a client ADAS application. This may in some cases be addressed by having the complete horizon continuously retransmitted to the client ADAS application. This is intended to enable a reconstructing subsystem to fill in in any gaps or correct for any missing messages e.g. if there is some fault or synchronization issue. The Applicant has realised that this solution is not ideal, and places considerable demands on network bandwidth. The horizon providing subsystem is required to continually retransmit horizon data at the same time as generating and transmitting horizon data. Another problem is that the client ADAS application has no control of such retransmission of the horizon data. The application may need to wait for a complete round of horizon data retransmission or longer to ensure that all profile messages have been received. The retransmission of horizon data will be performed continually by the horizon providing subsystem regardless of whether a client ADAS application does actually require it e.g. has a fault or synchronization issue. Thus, there is no way for a client ADAS application to prompt retransmission of messages, or indicate that it has a problem which might enable the retransmission of messages to be prioritised over the generation of new messages. Furthermore, this approach would not be compatible with the techniques described herein which may use offset "wraparound". The sequence of profile messages received for a particular attribute is particularly important to the client ADAS application when reconstructing the horizon.

In accordance with embodiments of the invention, the client ADAS application is able to itself to submit a reset request to cause the retransmission of horizon data from the horizon providing subsystem.

The client ADAS application may trigger the retransmission of horizon data whenever required, e.g. in the event of a fault or a problem with the synchronization between the client ADAS application and the horizon providing subsystem. For example this may occur when the client ADAS application identifies a situation which requires re-synchronization with the horizon providing subsystem, such as for error recovery or late initialization of the client ADAS application.

The method may comprise receiving a reset request from the client ADAS application, and retransmitting the horizon data provided to the client ADAS application in response to the reset request.

In those aspects or embodiments of the invention extending to the operation of a client ADAS application, the method may comprise the application submitting a request for the retransmission of the horizon data. The horizon data that is retransmitted includes the profile messages in respect of one or more attributes associated with the main path generated and transmitted to the client ADAS application in accordance with the techniques described herein. All such profile messages may be retransmitted. The method may comprise the client ADAS application identifying an error situation and/or synchronization issue with respect to the horizon providing subsystem and sending a reset message to the horizon providing subsystem requesting reset of the vehicle horizon, and the horizon providing subsystem receiving the reset message and retransmitting the horizon data.

Preferably the horizon providing subsystem stores generated horizon data i.e. profile messages to enable the retransmission of the horizon data i.e. profile messages to the client ADAS application if requested by the client ADAS application. Thus, in the event that a reset request is received from the client ADAS application it is not necessary to regenerate the horizon data/profile messages. The method may therefore comprise storing each profile message generated in the methods herein described.

In these embodiments any continual retransmission of the horizon data e.g. profile messages is disabled. Thus, the horizon data may be retransmitted to the client ADAS application only at the request of the client ADAS application.

The start of retransmitted horizon data e.g. profile messages may be indicated by a stub in the transmitted horizon data enabling it to be readily identified by a client ADAS application.

It will be appreciated that in accordance with the present invention, various steps are taken in relation to the transmission of profile messages to support longer horizons, which are particularly useful for optimization applications. These steps include the use of "offset wraparound" in generating profile messages, supported by transmission of the profile messages in order of non decreasing offset with respect to a reference origin e.g. an origin of the path and the transmission of at least one addition messages to facilitate use of the horizon data by the client ADAS application.

The following features may be used in addition to further support the ability to provide longer horizons. These features may be used individually or in any combination and are synergistic with the steps taken in relation to the generation and transmission of profile messages to support longer horizons.
- Ability to set maximum transmitted path on a per attribute basis
- Ability to provide unlimited maximum transmitted path
- Provision of specific route information attribute indicating route length and having an unlimited maximum transmitted path length
- Suppression of horizon data generation beyond destination of a route
- Ability for client ADAS application to request a rest of transmitted horizon data
- Use of a globally set speed unit.

The methods disclosed herein are computer-implemented.

Any of the processing steps disclosed herein may be performed by software executing on one or more processors, or by hardware, or by a combination of software and hardware. Information may be communicated by wired and/or wireless channels.

The methods in accordance with the technology described herein may be implemented at least partially using software e.g. computer programs. It will thus be seen that when viewed from further embodiments the technology described herein comprises computer software specifically adapted to carry out the methods herein described when installed on a data processor, a computer program element comprising computer software code portions for performing the methods herein described when the program element is run on a data processor, and a computer program comprising code adapted to perform all the steps of a method or of the methods herein described when the program is run on a data processor. The data processor may be a microprocessor system, a programmable FPGA (field programmable gate array), etc.

The technology described herein also extends to a computer software carrier comprising such software which when used to operate a graphics processor, renderer or microprocessor system comprising a data processor causes in conjunction with the data processor the processor, renderer or system to carry out the steps of the methods of the technology described herein. Such a computer software carrier could be a physical storage medium such as a ROM chip, CD ROM, RAM, flash memory, or disk, or could be a signal such as an electronic signal over wires, an optical signal or a radio signal such as to a satellite or the like.

It will further be appreciated that not all steps of the methods of the technology described herein need be carried out by computer software and thus from a further broad embodiment the technology described herein comprises computer software and such software installed on a computer software carrier for carrying out at least one of the steps of the methods set out herein.

The technology described herein may accordingly suitably be embodied as a computer program product for use with a computer system. Such an implementation may comprise a series of computer readable instructions either fixed on a tangible, non-transitory medium, such as a computer readable medium, for example, diskette, CD-ROM, ROM, RAM, flash memory, or hard disk. It could also comprise a series of computer readable instructions transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

It will this be seen that, when viewed from a further aspect, the present invention extends to computer software comprising instructions which, when executed on a computer processing system, causes the computer processing system to perform a method in accordance with any of the aspects or embodiments of the invention described herein. The computer software disclosed herein may be on a transitory or a non-transitory computer-readable medium.

The present invention in accordance with this further aspect may include any of the features described in reference to other aspects or embodiments of the invention to the extent it is not mutually inconsistent therewith.

In accordance with a further aspect of the invention there is provided a computer processing system, wherein the computer processing system is configured to perform a method in accordance with any of the aspects or embodiments described herein.

The present invention in accordance with this further aspect may include any of the features described in reference to other aspects or embodiments of the invention to the extent it is not mutually inconsistent therewith.

The present invention in accordance with any of its further aspects or embodiments may include any of the features described in reference to other aspects or embodiments of the invention to the extent it is not mutually inconsistent therewith.

It should be noted that the phrase 'associated therewith' in relation to data should not be interpreted to require any particular restriction on data storage locations. The phrase only requires that the features are identifiably related to one another. Therefore association may for example be achieved by means of a reference to a side file, potentially located in a remote server.

Features of any aspect or embodiment described herein may, wherever appropriate, be applied to any other aspect or embodiment described herein. Where reference is made to different embodiments or sets of embodiments, it should be understood that these are not necessarily distinct but may overlap.

Advantages of these embodiments are set out hereafter, and further details and features of each of these embodiments are defined in the accompanying dependent claims and elsewhere in the following detailed description.

### Brief Description of the Drawings

Certain preferred embodiments of the invention will now be described, by way of example only, with reference to the accompanying drawings, in which:
Figure 1 is a schematic illustration of the components of an exemplary ADAS system associated with a vehicle, which may be used to implement the methods of the present invention;
Figure 2 schematically illustrates the concept of an ADAS horizon;
Figure 3A illustrates a portion of a road network ahead of a current position of a vehicle up to a distance in the direction of travel defined by a limit of the distance that the ADAS horizon will extend once generated;
Figure 3B illustrates a number of paths which may be taken through the network;
Figure 3C illustrates the way in which these paths may be represented to an ADAS application;
Figures 4A, 4B and 4C illustrate different ways in which information about possible paths in the road network may be represented to the ADAS applications;
Figure 5 is a flow chart illustrating a method of providing horizon data involving generating profile messages in accordance with one embodiment of the invention;
and Figure 6 illustrates certain concepts relating to maximum and current lengths of a transmitted path in horizon data.

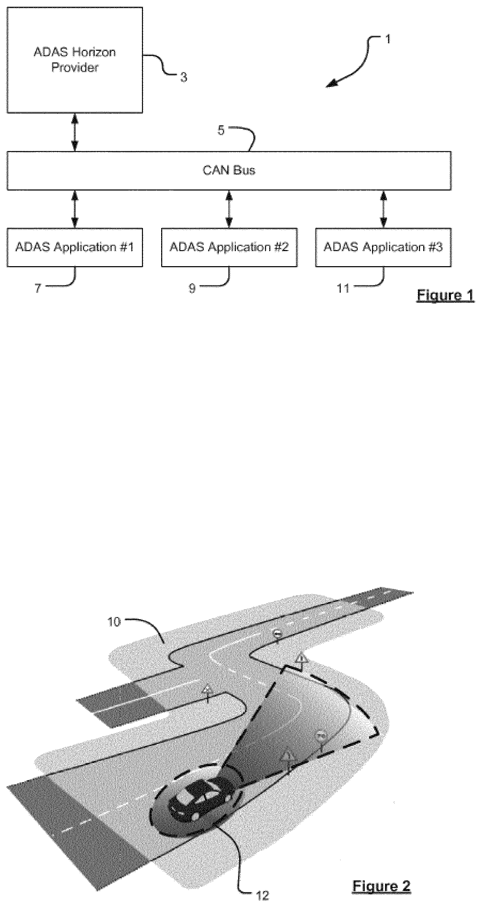

With reference to Figure 1, an ADAS system 1 includes a horizon providing subsystem 3, which communicates horizon data over a Controller Area Network (CAN) bus 5 to a plurality of client ADAS applications 7, 9 and 1 1 (herein referred to as "ADAS applications"). The client ADAS applications are arranged to implement ADAS functionality in controlling respective subsystems of the vehicle. For example, the ADAS applications may be for controlling braking, speed selection and suspension vehicle subsystems respectively.

The horizon providing subsystem 3 is arranged to provide data indicative of a driving horizon which is used by the client ADAS applications (the "ADAS horizon"). The ADAS horizon is an electronic horizon comprising data indicative of one or more possible paths ahead of a current position of a vehicle that it may be expected the vehicle will travel along. The ADAS horizon is based on digital map data.

The one or more possible paths include at least a main path, being a Most Probable Path (MPP).

In order to provide ADAS functions, the client ADAS applications require information about the road ahead, and its characteristics e.g. gradient, curvature, speed limit, etc. The vehicle horizon data provides such data required by the client ADAS applications to support their functionality.

The horizon providing subsystem 3 is arranged to obtain a vehicle horizon, and to provide data indicative of the horizon to the client ADAS applications. For example, the horizon providing subsystem 3 may cause the horizon data to be transmitted over the vehicle bus. The horizon data may be generated on board the vehicle e.g. by the horizon providing subsystem or a horizon generating subsystem in communication with the horizon providing subsystem. However, in other embodiments, the horizon may be generated at least in part elsewhere e.g. off board the vehicle such as by a server, and then obtained by the horizon providing subsystem 3 for provision to the client ADAS applications. Methods of generating vehicle horizon data are described in WO2014/068094A1 entitled "METHODS AND SYSTEMS FOR GENERATING A HORIZON FOR USE IN AN ADVANCED DRIVER ASSISTANCE SYSTEM (ADAS)", filed on 1 November 2013 by TomTom International B.V.

The horizon data is received by the client ADAS applications, and may be used as required by the applications to support their functionality. For example, a client ADAS application may use the horizon data transmitted thereto to reconstruct a copy of the horizon on the client side. As discussed in more detail below in relation to embodiments of the invention, different client ADAS application may require different types of horizon data to support their functionality, or, more specifically, data relating to different attributes of one or more paths of the vehicle horizon. The horizon data transmitted to a given client ADAS application may be customised to the needs of the application e.g. including the relevant attribute profile data. This may be achieved in any suitable manner. For example profile data types for which horizon data is to be transmitted to different client ADAS applications may be specified as part of a configuration process for the horizon provider. This has the advantage that the client ADAS application need not necessarily perform filtering on the client side when receiving horizon data and reduces the necessary bandwidth for transmission of horizon data between the horizon provider and client ADAS application. In other cases it is envisaged that alternatively or additionally the respective client ADAS applications may filter horizon data generated and transmitted by the horizon providing subsystem by reference to attribute type to obtain the required profile data in respect of those attributes for use in controlling their associated vehicle subsystems.

The horizon providing subsystem 3 may be arranged to be in communication with a memory for storing obtained horizon data, wherever this is obtained from. The ADAS horizon generating subsystem (wherever implemented) is also in communication with digital map data. This is used in determining the horizon. In some arrangements an ADAS horizon generating subsystem may be implemented using a software module separate from a digital map data store, or may otherwise include means storing such data. Thus the digital map data providing and horizon generating functions may be implemented separately or as part of a combined system.

Figure 2 schematically illustrates the concept of an ADAS horizon. It may be seen that the electronic ADAS horizon 10 provides the client ADAS application with information about the path ahead in a similar manner to a vehicle sensor horizon 12, but may provide information about the path beyond the limit of a vehicle sensor horizon, e.g. around a corner, and regardless of weather conditions, as the ADAS horizon is based upon digital map data.

It is desirable to reduce the amount of horizon data transmitted to client ADAS applications e.g. over the CAN bus. For this reason, in certain embodiments, only attribute data for the most probable path is transmitted to the client ADAS applications. The most probable path may be referred to as the "main path". This is the most probable future trajectory of the vehicle up to a limit of the ADAS horizon. Where the vehicle is following a pre-planned route to a destination, the main path will correspond to the pre-planned route. If the horizon extends beyond the destination, a continuation of the main path will correspond to a most probable predicted path e.g. based on driver behaviour. If there is no pre-planned route, then the entirety of the main path would correspond to a most probable predicted path.

At various points in a road network there will be nodes, i.e. decision points at which the vehicle may have a choice of possible outgoing paths. At a given time, a vehicle has a current position defined on a particular road segment. When determining the main path, it may be assumed that the continuation of the segment forms the most probable path until the first junction is reached. At the first junction a determination may be made using any suitable technique as to which of the plurality of outgoing paths form the continuation of the main path, if this is not already known (e.g. from a pre-calculated route). For example, this may be carried out using techniques described in WO2014/068094A1.

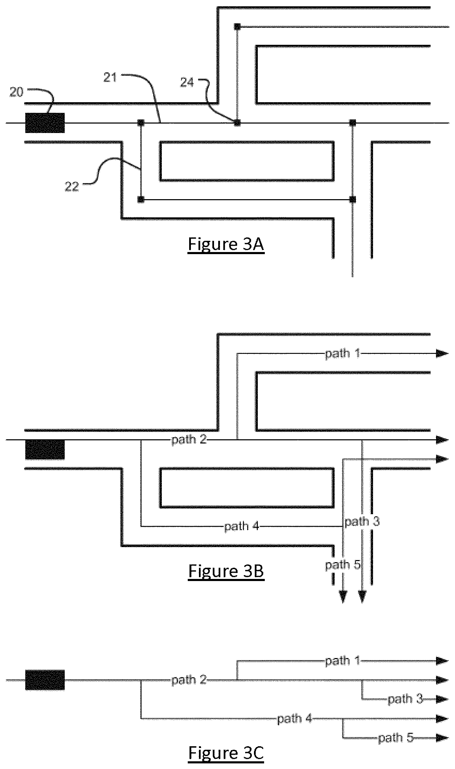

At each decision point along the main path there will be a possible alternative path that the vehicle may take if it diverges from the main path. An alternative path that emanates from a decision point along the main path may be referred to as a first level sub path beneath the main path. A path branching off from the first level sub path is referred to as a second level sub path and so on. This concept is illustrated by reference to Figures 3A, 3B and 3C.

Figure 3A illustrates a portion of a road network ahead of a current position 20 of a vehicle up to a distance in the direction of travel defined by a limit of the distance that the ADAS horizon will extend once generated, e.g. 200 m. The road network is made up of a plurality of links or road segments, e.g. 21, 22, connected by nodes e.g. 24. The generation of the ADAS horizon considers possible paths, i.e. trajectories, that may be taken by the vehicle through the road network rather than individual road segments and nodes.

Figure 3C illustrates the way in which these paths may be represented to a client ADAS application. This represents schematically the relationship between the possible paths through the road network. Path 2 forms the most probable or main path in this case, and paths 1, 3 and 4 are first level sub paths diverging from the main path at different respective decision points along its length. Path 5 is a second level sub path diverging from the first level sub path 4 at a decision point along its length.

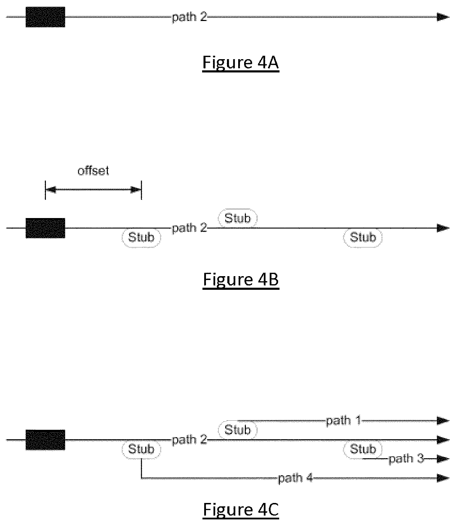

The ADAS horizon generating subsystem, wherever this is provided, will determine the most probable, i.e. main path 2. As discussed above, in some systems, the ADAS horizon generating subsystem could just transmit attribute data for this main path to client ADAS applications. An example of such a transmitted horizon is shown in Figure 4A. However, if the vehicle diverges from the main path, then the system will be left "blind" until a new most probable or main path is generated. Thus, in some cases it may be beneficial for the horizon generating subsystem to also determine at least the first order sub paths diverging from the main path.

Where one or more first level sub paths are determined, the horizon providing subsystem 3 may provide attribute data for the or each first level sub path over the vehicle bus to the client ADAS applications, together with the corresponding data for the main or most probable path. However, to reduce the amount of data transmitted, in some arrangements only minimal data is transmitted regarding the presence of a first level sub path and its location along the main path. This may be done by providing a suitable stub marking a position along the main path at which a first level sub path is present. The stub position may be defined by reference to an offset from the start of the currently traversed road segment defining the main path.

Figure 4B illustrates the form of a possible horizon to be transmitted in this case. If the client ADAS applications require additional data regarding the course and properties of a first level sub path, e.g. if the vehicle diverges from the main path, then the stub may be used to request the attribute data the first level sub path from the ADAS horizon provider, which may then be transmitted over the vehicle bus to the client ADAS applications. Again, the client ADAS applications would be left temporarily blind in this situation.

Another option is shown in Figure 4C. Here attribute data is transmitted relating to the each of the first level sub paths as well as relating to the main path. This may enable the ADAS applications to continue to operate even if the vehicle starts to travel along one of the first level sub paths rather than the main path. Any second level sub paths may be transmitted as stubs as with the first level sub paths in the Figure 4B arrangement. In some embodiments information about the first and second level sub paths is determined and transmitted to the client ADAS applications.

In general, the ADAS horizon providing subsystem 3 provides vehicle horizon data to a client ADAS application in respect of one or more possible paths up to a given distance ahead of the current position. The ADAS horizon data that is transmitted to the client ADAS applications e.g. over the vehicle bus 5 contains at least attribute data relating to the main or most probable path (up to a certain extent ahead of the vehicle). The way in which this horizon length or maximum transmitted path length may be set in accordance with embodiments of the invention is described in more detail below. It will be appreciated that the horizon length/maximum transmitted path length is a preset length, and may be set globally for all attributes, or, in accordance with certain embodiments described below, may advantageously be set on an attribute by attribute basis.

The ADAS horizon providing subsystem 3 provides the attribute data in relation to any attributes that may be required by the different client ADAS applications 7, 9, 11 to support their operation, or data allowing such attribute data to be determined by the applications. For example, data relating to the curvature of the path ahead may be required by a client ADAS application for controlling braking of the vehicle. As mentioned above, individual client ADAS applications may filter horizon data transmitted by the horizon providing subsystem by attribute to obtain the horizon data they require or the horizon data to be transmitted to different client ADAS applications may be set at the horizon providing subsystem as part of a configuration process.

The present invention relates to the way in which the vehicle horizon data is provided to a client ADAS application. Certain challenges are involved in transmitting the horizon data to a client ADAS application. A balance must be found between providing sufficient horizon data to support the functionality of a given client ADAS application while avoiding overloading the application with unnecessary data.

Vehicle horizon data may be provided by a horizon providing subsystem 3 to a client ADAS application in accordance with an automotive standard protocol. One such standard protocol is the ADASISv2 protocol. The ADASISv2 protocol seeks to deliver horizon data in respect of a predicted or pre-planned path of a vehicle in a convenient vehicle-centric way. In this ADASIS v2 horizon representation, digital map data is exposed in a simplified trajectory-based view, which does not contain unnecessary map details e.g. roads which a vehicle is not expected to travel, or map attributes irrelevant for the intended use-case of the client ADAS application

The ADASIS v2 protocol provides horizon data to a client ADAS application in 64-bit messages. The messages can be grouped into the following categories:
1. Position message ; a position message describes a current vehicle position on a path. Position messages are generated within the onboard software of the horizon providing subsystem of the vehicle. They translate absolute GNSS location into a relative, map-matched position on a path, expressed as offset from an origin of the path.
2. Meta data message describes general properties of a region where the vehicle currently is located.
3. Path profile messages; each path profile message describes a certain attribute of interest of the path. A path profile message includes data indicative of the type of the attribute to which it relates, a path identifier identifying the path to which it relates and data indicative of an offset on the path from the origin of the path to which a particular value of the attribute relates. The path profile messages for a particular attribute and path describe the variation of the particular attribute with distance along the path.

The horizon data in accordance with ADASISv2 is therefore provided in terms of path profiles in respect of one or more attributes of a path i.e. the main path and optionally one or more alternative paths. The path profile data is provided using path profile messages in respect of different locations along the path (as defined by the offset data). The horizon data is obtained at least in part using digital map data. However, horizon data e.g. path profile data may be obtained at least in part based on other sources, such as from a route planner, online service etc.

As used herein, an "attribute" is indicative of one or more property of a path. Examples of such properties include speed limit, slope, curvature, form of way, number of way, build-up area classification etc. Such properties are indicative of properties of the road segments making up the path. Other types of attribute may relate to properties such as whether a traffic sign is present. While some attributes are indicative of a single property e.g. slope, in other cases, multiple properties are bundled into a single attribute. One example of this is the segment attribute for which a segment profile is provided in ADASISv2. The segment profile provides data indicative of how each of these different properties vary along the path. The segment profile includes information relating to speed limit, form of way, number of lanes, build-up area classification etc.

Each profile message provides a value for its applicable attribute at a particular location along the path defined by the offset. The attribute value for a given location may be referred to as a "profile spot". The value may be a binary value e.g. indicating whether a traffic sign is or is not present, or some other property of the path which can be expressed in such terms. In other cases, the value may provide a quantitative definition of the attribute at the relevant location. Where the attribute is indicative of multiple properties, the value is indicative of a value for each such property i.e. in the case of a segment profile. Thus, the value of the attribute may define multiple values in respect of different properties, being e.g. in the form of a vector.

According to ADASISv2, a profile message in respect of an attribute will be transmitted in respect of locations where there is a change in the value of the attribute. The client ADAS application must then interpolate between these discrete profile spot values to obtain values for the attribute for intervening locations along the path. There are a number of ways in which such interpolation may be carried out, and the most appropriate form of interpolation may depend upon the type of attribute. For example, a step profile may be used in which the value of an attribute is considered to remain the same until the next location at which a profile message is transmitted for that attribute. Alternatively, a linear or higher order interpolation may be used (e.g. a linear or binomial function etc) to obtain values for intervening locations. The value for an attribute provided by a profile message may therefore, in a simple case, indicate a single value for the attribute, but in other cases may indicate multiple values defining a set of parameters which may be used to obtain a value for the attribute using a function defining the attribute or may indicate a function used to obtain the value of the attribute. Such multiple values may be provided in a vector. The attribute type data of a path profile message may indicate the type of interpolation to be used in obtaining values for the attribute along the path between profile spots.

The ADASIS protocol enables client ADAS applications to receive the horizon data they require to implement their particular functionality. Certain parameters may be configured to customise the horizon data provided to the needs of a particular ADAS application. For example, the extent to which sub level path data is provided, or the particular attributes for which path profile data is required may be selected. A horizon length for all attributes may be globally set.

One common type of functionality provided by client ADAS applications relates to comfort and safety ADAS features. Typically, such ADAS applications do not require a particularly long horizon length. For example, a horizon extending over a few hundred metres, or at least within a few kilometres of a current vehicle position may be adequate.

As the current position of the vehicle progresses along the main path, in accordance with ADASIS v2, the horizon i.e. the main path is extended to ensure that a target length for the vehicle horizon ahead of the current position is maintained (a maximum transmitted path length). Horizon data e.g. path profile messages are provided up to the limit set by the horizon length along the main path. In this way, the client ADAS applications are provided with the necessary information to support their functionality for the entire journey, while giving information only in respect of the predetermined horizon length ahead of the current position at any given time.

The Applicant has realised that while such an approach may be suitable for certain types of client ADAS applications, other types of client ADAS applications would ideally receive horizon data relating to a much greater distance ahead of the current position of the vehicle than may be achieved using the ADASIS protocol. Such longer horizons would be helpful in particular for optimization applications. An optimization function typically optimizes some aspect of the vehicle's operation over a longer distance, such as over an entire route. For example, an optimization function may select the most appropriate gear or other factors to provide greater fuel efficiency, or may optimize aspects of the vehicle's operation to conserve battery life for an electric vehicle. To support the functionality of an optimization application it may be desirable for the application to receive horizon data covering the entirety of a pre-planned route to a destination, or at least a significant portion thereof. This may be a distance in an order of from dozens to hundreds of kilometres.

The present invention provides various techniques which may support the provision of a longer vehicle horizon to a client ADAS application. This may be achieved in a manner which is compatible with the existing ADASISv2 protocol, enabling the techniques to be implemented by making appropriate modifications to the protocol. This is advantageous in providing simpler implementation and wider applicability and interoperability, avoiding the need to use an entirely new protocol to deliver horizon data.

The Applicant has recognised that the ADASISv2 protocol places certain constraints on the ability to provide longer range horizons.

One constraint relates to the number of bits available to carry offset information in respect of path profile messages. As mentioned above, attribute data for a path is provided to a client ADAS application using path profile messages. Each path profile message is in respect of a given location along the path i.e. provides data indicative of a value of the attribute to which the profile relates at that location along the path. This location is expressed in ADASISv2 as an offset with respect to an origin of the path. In the examples described herein, the path to which path profile data relates will be taken to be a main or MPP. The same principles may be extending to any other path of a horizon for which profile data is to be provided.

The ADASIS v2 protocol uses 13 bits to carry offset information for path profile messages. This provides an allowed number range for defining an offset value in a profile message of 0-8190. This is defined in relation to offset units (as set by the system). A resolution can be set to define a unit length for each offset unit. Assuming a unit length of 1 meter, this provides a maximum available offset length of 8190m. An offset having a value greater than this e.g. 8191m would be considered invalid, being outside the valid offset range of 0-8190m.

A previously proposed approach to increase a length of the horizon beyond this 8190m limit, was to decrease the resolution, i.e. treat the offset value in a different unit of length. For example, taking 1 offset unit to correspond to 10m rather than 1m, the 8190 limit would instead provide a vehicle horizon length of 81900m i.e. around 82km ahead of a current position.

However, any decrease in the resolution for offset has the disadvantage that detail of the digital map data used to provide the horizon may be lost. The extent to which this occurs may depend upon the attribute to which the profile relates, and what form of interpolation is used to obtain values between profile "spots".

Where the resolution of the offset is decreased, this may result in multiple profile spots (for the higher resolution offset unit) being mapped to the same lower resolution offset unit.

Where linear interpolation is used, for example in respect of a slope profile representing the steepness of a road incline or decline, this will result in a loss of precision. It is necessary to adopt some technique e.g. weighted average to provide a representative value for the attribute (for a particular profile spot/message in the lower resolution system), based on the combined values associated with the original higher resolution profile spots.

Where step interpolation is used, which means that the value of an attribute is considered to remain the same between successive profile spots in the applicable resolution system, details of the value of the attribute will be lost if there is a change within the lower resolution offset unit (i.e. if this encompasses multiple profile spots according to the original higher resolution system). This may result in a reduction in thematic accuracy, positional accuracy and coverage. One example of such an attribute which may have a step interpolation is the segment profile, which represents various road properties including speed limit, form of way, number of lanes, build-up area classification among others. For a particular use case, a dedicated merge strategy is then required to define the values for these properties associated with a particular profile spot according to the lower resolution system. For example, for an energy optimization functionality of an ADAS application, a merging strategy which selects the highest applicable speed limit may be appropriate. For other road properties such as number of lanes, it is less clear how to obtain a representative value, and information loss is unavoidable.

Any reduction in offset resolution will also mean that profile spots will lose their positional accuracy. This may result in an undesirable lack of accuracy e.g. for a traffic sign attribute profile, which indicates the location of traffic signs along the path A reduction in the offset resolution will have the effect that all of the traffic signs within the same (lower) resolution unit will now appear to be at the same location.

In general, a decrease in the offset resolution results in various combinations of thematic, positional accuracy and coverage losses. The lower the resolution, the greater and more widespread the losses become.

In accordance with the invention, an alternative approach to overcoming the limitations of ADASISv2 and accommodating larger offsets is taken, which may avoid the need to reduce offset resolution, or at least may enable any reduction in offset resolution to be balanced against a desired increase in maximum available offset obtainable (and hence a longer horizon).

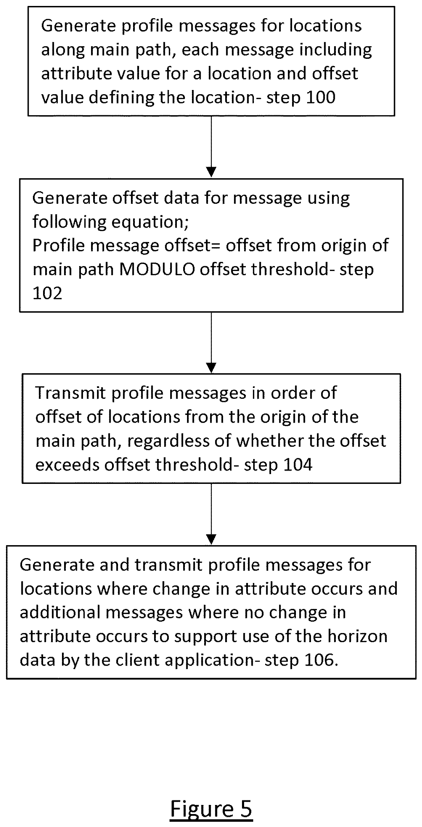

This technique is described with respect to Figure 5.

Figure 5 is a flowchart illustrating one example of a method in accordance with the invention for providing horizon data relating to an attribute associated with a main path of a vehicle horizon to a client ADAS application of a vehicle.

In accordance with step 100, a plurality of profile messages are generated, each including attribute data indicative of a value of the attribute associated with a given location along the main path, and offset data indicative of an offset along the main path defining the given location. This offset data is referred to as a "profile message offset".

In accordance with step 102, the offset data defining a given location to which a profile message relates i.e. the profile message offset, is determined by the following equation;

Profile message offset= offset from origin of main path MODULO offset threshold (equation 1)

The MODULO operator has its usual meaning in the art, and returns a remainder after the offset from the origin of the main path is divided by the offset threshold.

Here the profile message offset, offset from the origin of the main path and the offset threshold are all treated as dimensionless, being expressed in terms of offset units of the system.

This has the effect that when an offset of the given location from an origin of the main path is no greater than an offset threshold from the origin of the main path, the profile message offset is defined relative to the origin of the main path. In contrast, when the offset of the given location from the origin of the main path exceeds the offset threshold, the profile message offset is defined relative to the largest positive integer multiple of the offset threshold that is still smaller than the offset of the location from the origin of the path. The offset of the location from the origin of the main path may be thought of as the actual or "absolute" offset of the location with respect to the origin of the main path. However, it will be appreciated that the origin of the path is itself defined by the time at which the path was generated as part of ta horizon generating process. The profile message offset is (where the offset from the origin of the path exceeds the offset threshold) an adjusted offset.

For example, where the offset threshold is 8190 offset units, if the offset of a given location from the origin of the main path is 8191 offset units, this would give a profile message offset of 1 offset unit i.e. (8191- 1x8190). Based on equation (1), profile message offset = 8191MODULE8190= 1.

Where the offset of a given location from the origin of the main path = 16381 offset units, profile message offset=16381MODULO8190= 1 offset unit.

In effect, the profile message offset wrapsaround and starts from 0 once more, each time a positive integer multiple of the offset threshold is passed, so that the offset threshold (or maximum available offset) is not exceeded. This may happen multiple times for longer horizons.

Taking another example;
Assuming offset from origin of main path= 10000 offset units, profile message $offset = 10000 MODULO 8190 = 1810 offset units \left(since \left(1\times 8190\right)+1810=10000\right) .$
If offset from origin of main path= 20000 offset units, profile message $offset = 20000 MODULO 8190 = 3620 offset units \left(since \left(2\times 8190\right)+3620=20000\right) .$

In the first of these cases, the profile message offset is expressed with respect to the offset threshold i.e. there is a single wraparound of the offset. In the second case, the profile message offset is expressed with respect to 2x offset threshold i.e. there is second offset wraparound.

The profile messages are received by a client ADAS application and may be used to reconstruct the vehicle horizon on the client side. It will be appreciated that unless steps are taken to overcome such issues, the client ADAS application may find it difficult to distinguish between a profile message offset based on different numbers of wraparound. For example, in the second case above, the profile message offset is 3620 based upon two wraparounds. However, a horizon reconstructing subsystem of the client ADAS application cannot determine whether this corresponds to an offset from the origin of the main path of 3620 offset units, 11810 (3620+ 1x8190) or 20000 (3620 + 2x8190) offset units. All of these would provide a profile message offset of 3620 according to equation 1.

In another example, the offset of a first given location from an origin of the main path may be 8000 offset units. This will result in a profile message offset that is also 8000 offset units. A second location may have an offset from an origin of the main path of 8200. This will give a profile message offset of 10= 8200MODULO8190 offset units. Thus, the offset associated with the second location appears to be less than that associated with the first location, although it is in fact further from the origin of the main path.

In embodiments of the invention, additional measures are taken to support multiple wraparounds of profile message offset, while still enabling a client ADAS application to readily determine the actual offset of a given location associated with a profile message from the origin of the path.

Firstly the profile messages in respect of the given attribute type are transmitted in order of offset of the given locations to which the messages relate from the origin of the main path, regardless of whether the offset from the origin of the main path exceeds the offset threshold- step 104. Thus, in the second example above, if the client ADAS application receives successive profile messages with offset of 8000 and 10, it may assume that the offset is non-decreasing, such that there must have been a wraparound occurring between these values i.e. that the value of 10 is actually expressed with reference to an integer multiple of the offset threshold.

While this non-decreasing offset approach may be helpful, it has some limitations, particularly where multiple offset wraparounds occur. For example, when determining the actual offset relative of the origin of the path for the profile message with offset 10, the client ADAS application may not be sure whether the actual offset should be restored as 10+ 8190, or 10+ nx8190, where n=integer. This is apparent based on the first example above, which illustrates how the same profile message offsets will repeat for each successive offset wraparounds. Where the given locations associated with profile messages are relatively close, or at least less than the offset threshold, it may be clear where an offset wraparound has occurred, since the profile message offset will increase before suddenly jumping to a lower value. However, if profile messages are associated with locations that are further apart, in particular exceeding the offset threshold, the problem with determining the actual offset from the origin of the path may arise, since it may be unclear how many times the profile message has wrapped around between successive messages.

Profile messages are transmitted where there is a change in the value of the attribute. This is consistent with ADASISv2 and may help to avoid unnecessary transmission of data to the client ADAS application and overloading thereof. However, according to step 106 of Figure 5, in embodiments of the invention one or more additional profile messages are generated and transmitted to the client ADAS application to support use of the horizon data by the client ADAS application. These additional profile message(s) are not strictly required to convey attribute information, and are in respect of locations at which there is no change in the value of the attribute. These additional profile messages assist the client ADAS application in determining when an offset wraparound has occurred, and hence to reconstruct the actual offset of the location with respect to the origin of the path using the profile message offset. This ensures that the offset relative to the origin of the path of any subsequent profile messages in respect of a change in the attribute is correctly determined.

By way of example, assuming profile messages are to be provided in respect of changes in the attribute value at locations having offsets of 10 and 8300 offset units from the origin of the path, these would give rise to profile message offsets of 10 and 210 offset units respectively for offset threshold of 8190. An additional profile message introduced within 1x offset threshold from the 10 offset unit location, for example at 7000 offset units, would help the client ADAS application in identifying that the offset has wrapped around i.e. that the offset increased up to 7000 offset units before dropping back to 210 offset units. The additional no change messages are treated in the same way as the other profile messages in respect of changes in attribute value, and are thus transmitted in non decreasing offset order.

It will be appreciated that the above steps i.e. transmitting messages in non decreasing offset order and introducing additional (no change) messages, are performed for each profile attribute type. Thus, it is envisaged that messages in respect of different attributes may be transmitted in parallel, provided, for each attribute type within the set of profile messages, the non decreasing order is satisfied.

It will also be understood that while it is key that the profile messages are transmitted to the client ADAS application in non decreasing offset order, the generation of the profile messages need not necessarily be in the same order (for example messages could be generated at least in part in parallel), though typically both the generation and transmission of the profile messages is in the non decreasing offset order.

For ease of illustration, the determination of profile message offset has been illustrated in relation to the case in which offset is considered with respect to a reference origin that is the origin of the main path, with the offset threshold being defined in relation to the origin of the main path. However, other reference origins on the path may instead be used as discussed above, such as defined based on a current position of the vehicle at a time the horizon was generated. Any reference to the "origin of the main path" should be replaced by the applicable "reference origin" in such cases. It will be appreciated that whatever reference origin is chosen, whether an origin of the main path or otherwise, the reference origin is a fixed reference point. The reference origin remains fixed throughout the performance of the methods described herein. The offset threshold and any multiples thereof are defined with respect to this reference origin.

By way of example, in some other exemplary embodiments, when the horizon is generated, the reference origin may be determined based on the vehicle position at that time. The reference origin may correspond to the vehicle's position or may be a fixed distance behind the vehicle's position. However, once the reference origin has been determined, it will remain fixed and may change only if the horizon is regenerated.

Once the reference origin has been selected, however this is done, it may be considered as a point 0. If the vehicle now has a position at offset X units from point 0 and a profile message relates to a location that is X + C offset units along the path, the client ADAS application will be able to determine that the location to which the profile message relates is C offset units ahead of the current position.

The above examples are with respect to an offset defined in offset units as defined by the system i.e. by the horizon transmission protocol.

In practice, a resolution for the offset is also defined. The offset resolution defines the distance along the path that an offset unit is to represent i.e. the unit length for offset. The offset resolution may be configured in advance and/or may be transmitted to the client ADAS application in any suitable manner. Typically the offset resolution is a global preset setting, that is configured for all routes and attributes. Such an offset resolution may be configured in advance so that it is known to a client ADAS application and/or may be communicated to a client ADAS application in any suitable manner, such as using a global application state message, which could be a metadata or other custom message type. It is, however, envisaged that the offset resolution may be configurable to different values for different situations e.g. for different attributes and/or routes. In such cases, the applicable offset resolution for a given attribute, route etc. would need to be communicated in some manner to the client ADAS application e.g. using an appropriate message such as a global application state message as previously mentioned.

It has been found that setting a global offset resolution is advantageous, which is then adopted for all profile messages transmitted to client ADAS applications, in respect of any attribute type. This facilitates processing by the client ADAS applications, and reduces complexity for both the horizon providing and horizon reconstructing subsystems. In any case, whether or not it is configurable for different attributes etc., the offset resolution is predetermined.

In one example where the offset resolution is conveyed using a global application state message of some type, the global application state message will carry the meaning of 1 offset unit. For example, if this has a value of 10, this would denote that each unit is worth 10m. When a profile message for an attribute is generated, the offset value may be rounded to the nearest value representable in the applicable unit. For example, an offset value of 93m would be represented by value 9 in a profile message where the offset resolution has been set to 10m. The client ADAS application may then interpret the offset value using the offset resolution value to determine that the offset is 90m.

The most appropriate resolution for offset may be selected to result in the horizon being transmitted to a desired length. This will depend upon the functionality of a client ADAS application using the horizon data. For any given offset resolution, the ability to wraparound offset while taking measures to ensure that the client ADAS applications can still readily determine the actual offset from the origin of the path enables horizon data to be transmitted over a longer path length. However, it has been found that it can be advantageous to still reduce offset resolution to some degree even when using the offset wraparound techniques described herein, as this may reduce the amount of data to be transmitted to and processed by the client ADAS applications. Some granularity of the digital map data may be tolerated without impeding the ability for a client ADAS application to perform optimization functions.

While the most appropriate resolution may depend upon a particular use case of a client ADAS application, it has been found that an offset resolution of around 25m may provide a useful balance between the amount of data to be transmitted/processed and allowing a longer horizon. Such an offset resolution would provide a horizon length of around 200km, without exceeding the offset threshold i.e. within one wraparound range (8190x25m=204.750km). Longer horizon lengths may be provided by wrapping around the offset. A resolution unit in the range of from 10m to 150m, such as from 15m-30m, for example in the order of 25m, has been found to provide a comfortable level which allows the horizon length to be extended to the extent to support optimization functionality without degrading map data accuracy to too great an extent.

One key parameter of a vehicle horizon is the distance ahead of the current position of the vehicle that the transmitted horizon extends. This may be referred to as the horizon (or path) length. A maximum transmitted length of the horizon (or path) may be set, providing a limit as to how far ahead of the current position along the main path horizon data is transmitted with respect to. Thus, path profile messages will be transmitted with respect to locations along the path up to this maximum transmitted length. In practice, if no change in an attribute occurs in the vicinity of the maximum transmitted length, profile messages may be transmitted in respect of a length that is less than the maximum length of the transmitted horizon.

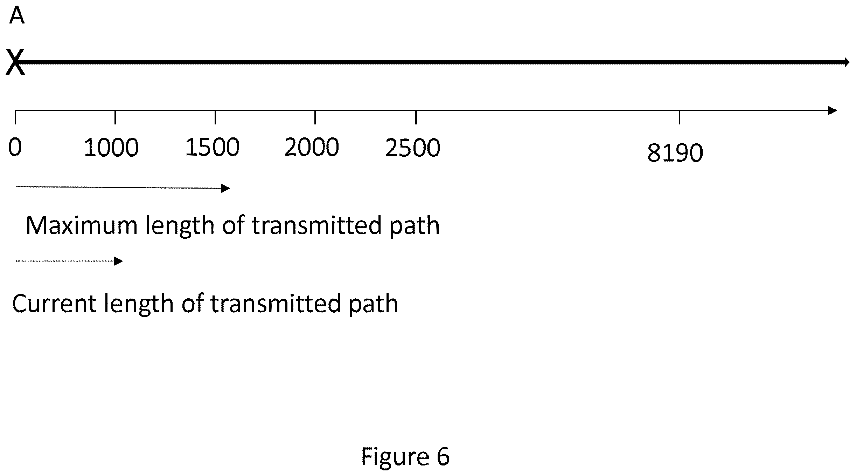

For example, referring to Figure 6, in terms of offset units, the offset threshold is 8190. This defines a maximum offset available without wraparound. A maximum length of the transmitted horizon may be set to 1500 ahead of the vehicle's current position A (shown at the origin of the path i.e. offset= 0). The profile messages will therefore be transmitted up to a maximum distance of 1500 offset units ahead of the current position of the vehicle as it advances along the path. However, the actual transmitted path length will only extend to the furthest distance within the maximum transmitted path length at which a change in attribute occurs requiring a profile message.

For a given attribute, in one example, consider the situation if there is a change in the attribute at 1000 offset units ahead of the current position A, and then again at 2000 offset units ahead of the current position. During travel from A to 500 offset units, the maximum length of the transmitted horizon is set to 1500 offset units ahead of the current position. However, only the attribute change at 1000 offset units falls within this range. The length of the horizon actually transmitted will extend only up to the 1000 offset unit point, since this defines the furthest point at which a profile message in respect of an attribute change is present within the maximum length of the transmitted horizon. Once the 2000 offset unit change falls within the 1500 offset unit maximum transmitted path length ahead of the current position i.e. once the current position has reached 500 offset units from A, the actually transmitted path length will extend up to the 1500 unit maximum to include a profile message in respect of the change at the 2000 offset unit location. This is a simplified case assuming there are no "additional" messages in the 1000-1500 range for the applicable attribute.

It has been found that it is advantageous to be able to set the maximum transmitted horizon length to different value for different attribute types. Thus, rather than transmitting all profile messages, or more generally horizon data, for different attribute types up to a globally configured length that is the same for all attributes, in accordance with preferred embodiments of the invention it is possible to configure the maximum transmitted horizon length for different ones of the attribute types independently. This may be implemented in a manner consistent with the ADASISv2 protocol, which uses a global length. Instead, an option may be provided to selectively override the configured horizon length for each profile type. Of course, other ways of implementing independently configurable horizon length for different attribute types may be used. In particularly preferred embodiments, the maximum transmitted horizon length may be set to a value up to an unlimited level.

The most appropriate maximum transmitted horizon length for a particular client ADAS application will depend upon its functionality. A suitable value may be selected to ensure that the application receives sufficient data e.g. profile messages to enable it to perform its functionality while avoiding excessive amounts of data being transmitted, which might undesirably result in buffer overflows or other problems in the ADAS application or a reconstructor subsystem thereof. Shorter maximum transmitted horizon lengths may be more appropriate for attribute which vary more dynamically, avoiding client ADAS applications receiving and caching data over longer distances ahead of a current position where the data may become outdated. The maximum transmitted horizon length should also be set having regard to an offset resolution (which may be set globally as set out above). For example, with the offset resolution of 25m exemplified above, a maximum transmitted horizon length may be set to 200km if it is desired to stay within the maximum offset available without wraparound, or a longer distance if offset wraparound is to be used. Conversely, a higher resolution may be used while keeping a similar maximum transmitted horizon length, if offset wraparound is exploited. Since the present invention enables offset wraparound to be performed in a reliable manner, and without detriment to the ability of the client ADAS application to reconstruct the horizon, a wide range of possibilities are available to balance resolution and maximum transmitted horizon length to customise operation to the requirements of a particular client ADAS application.

In particular, where the main path is a pre-planned route, it has been recognised that it is advantageous to be able to extend the maximum transmitted horizon length to encompass the entire route i.e. to extend to the destination. However, in other cases, it may be appropriate to cover only a part of the route. For example, client ADAS applications providing safety or comfort functionality may only need to see a portion of the route, in contrast to optimisation applications which would ideally have access to a horizon covering most or all of the route. Thus, horizon data in respect of attributes for the former type of client ADAS application e.g. relating to slope, curvature etc may be provided over a shorter horizon length than horizon data in respect of attributes used by optimization applications. In any event, the present invention enables a horizon of optimal length to be selected over a planned route. While the ability to select horizon length for a particular attribute is particularly useful in the context of a pre-planned route, it is also helpful when free driving, enabling horizon data in respect of different attributes to be provided over lengths customised to the needs of different client ADAS application using the data. A difference in the absence of a pre-planned route is that the main path i.e. MPP will need to be updated based on driving behaviour if a prediction of the main path turns out to be incorrect. This may necessitate the regeneration and transmission of horizon data.

Returning to the context of a pre-planned route, it has been found that it is particularly useful for some client ADAS applications to be aware of the length of the pre-planned route to a destination as soon as possible, ideally at the outset as soon as the route is generated, and before driving along the route occurs. For example, this may be useful for an optimization application, allowing it to optimize aspects of the vehicle's travel along the route e.g. in terms of fuel economy, conserving battery power etc. The Applicant has realised that such route length data may be conveyed by exploiting the ability to customise the transmitted horizon length on an attribute by attribute basis. More particularly, a new attribute type may be introduced providing route information. This will result in profile messages being transmitted in respect of this attribute type, including a profile message indicative of a destination associated with the route. The destination will be associated with the location that is the end of the route.

By setting the transmitted horizon length to unlimited for this attribute, it is ensured that the profile message indicative of the destination will always be transmitted to the client ADAS application. This may occur as soon as the route information is available e.g. once the route information is obtained from a route planner, which may be a separate cloud-based entity. The route information attribute data may thus be obtained without the need to process digital map data, and potentially before fuller horizon data has been generated using digital map data. This enables an optimization application to perform route optimization without delay, potentially before it receives other horizon data in respect of other attributes. The route information attribute may convey waypoints where present as well as a destination. The destination, and any waypoints, will provide profile "spots" in respect of which path profile messages are generated and transmitted. It will be appreciated that in some cases only one profile message would be generated and transmitted in respect of the route information attribute e.g. in relation to the destination. Thus, the additional measures described above to assist in interpreting offset information e.g. in relation to transmitting profile messages with non decreasing offset and generating and transmitting additional profile message(s) may not be applicable in respect of this attribute type.

By providing a dedicated route information attribute indicative of route length, this information is available to the client ADAS application at an earlier stage than if it were conveyed through other attribute types e.g. through segment profile messages. This also enables the route length to be conveyed with a minimal number of messages e.g. one message, in contrast to an attempt to try to convey route length information using an existing attribute, such as a segment attribute, which would require profile messages for the segment attribute (relating to all of the properties it covers) to be generated and transmitted up to the destination at the start of travel. This would be undesirable, particularly for longer routes.

Taking an example, consider a scenario where a planned route spans over 600 km, and the maximum transmitted length of the Horizon is 200 km. In this case, a client ADAS application can optimize for the 200 km using the transmitted horizon data. However, it will need to do so in a manner that is sub-optimal, since the results would need to be satisfactory whether the route is only slightly over 200km or in fact much longer. The client ADAS application does not know how long the route is since this is outside the maximum transmitted length of the horizon (at least at the start of travel). It will be apparent that if the client ADAS application knew the length of the entire route, the results of the optimization might be different. By setting the maximum transmitted length of the horizon instead to an unlimited value for a route information attribute as previously described, the client ADAS application will have knowledge of the length of the route to the destination at the outset. Knowing that the route is long, exceeding 600km, the optimization performed may be more conservative, preserving more energy in anticipation of future demands. However, in another case, if the route were only slightly longer than 200km, the optimization can be more aggressive, reaching a global optimum.

It will be understood that the maximum transmitted length of the horizon effectively defines a horizon window, starting from the current position of the vehicle which will advance with the vehicle as it moves along the main path.

Where a pre-planned route to a destination has been set, horizon data relating to locations beyond the destination is of no relevance to the operation of client ADAS applications. However, a horizon generating subsystem will, in the absence of steps being taken to the contrary, continue to generate horizon data by predicting a continuation of the main path (MMP) beyond the destination. The horizon providing subsystem would then continue to generate and transmit profile messages in respect of the continuation of the path. Such data is not useful and only serves to consume computational resources on the side of the horizon providing subsystem and client ADAS application. It has been recognised that this problem is exacerbated where longer horizon lengths are used, as facilitated by the techniques described herein.

In accordance with some preferred embodiments of the invention, profile messages in respect of attributes are generated and transmitted only in respect of locations along the main path up to the destination where the path is a pre-planned route. In other words, the horizon data, or more specifically path profile data, is capped at the destination, such that the horizon window cannot extend beyond the destination.

In order to assist in use of the transmitted horizon data by client ADAS applications in the context of the longer horizons supported in accordance with the invention, the Applicant has realised that it would be useful for the speed unit to be set globally for the horizon i.e. for all profile messages in respect of attribute types that are generated and transmitted, regardless of a current location of the vehicle.

When a vehicle follows a longer path, whether or not this is a pre-planned route, the vehicle may cross a boundary between countries where different speed units are used, potentially multiple times. For example, a route may cross between Northern Ireland and Republic of Ireland, which use mph and km/h, respectively. This could occur even with a route of the order of 100km. A similar situation may arise with the US/Canada border.

In accordance with the ADASISv2 standard protocol, speed limits are provided using the segment attribute profile for the path. The segment attribute includes the speed value only, and not the speed unit, which is instead provided globally in the metadata horizon message. The client ADAS application then takes the unit for the speed value to be that set by the last metadata horizon message. If the vehicle crosses a country border resulting in a speed unit change during travel along a path forming part of the horizon, the horizon can be reset when the vehicle reaches the border to repopulate the segment profile of the horizon with the speed values appropriate under the new speed limit. Another approach would be to update the content of all segment attribute profile messages. Neither option is desirable for longer range horizons, since these may involve multiple changes in the speed unit during a journey. Repopulating the segment profile or updating segment profile messages would consume considerable computational resources.

Instead, in accordance with exemplary embodiments of the invention, the speed unit is effectively pinned so that the client ADAS application understands that every speed limit value in the horizon, i.e. in a profile message of the horizon, is to be understood to be with respect to the same globally set speed unit. If the vehicle crosses a boundary between countries using different speed units, the same speed unit continues to be applied. All speed limit values e.g. of speed limit attribute data such as segment data, are therefore determined with respect to the globally set speed limit, even for locations where the actual speed limit is expressed in a different speed unit. The speed unit may be set to be always km/h or mph, depending on a configurable user preference. The Applicant has recognised that for most purposes, in particular those supporting optimization applications operating over longer routes, the speed limit at any given location may be adequately described using the same globally set unit, regardless of whether this differs from a locally used unit. For example, 30mph may be taken to sufficiently correspond to 50km/h, such that if the global speed unit is set to mph, the speed value for a 50km/h segment may be set as 30mph or vice versa. Thus, it has been recognised that for whichever speed unit is selected, corresponding speed values for any speed limit may be determined in respect of the other speed unit according to the applicable granularity permitted for speed value (e.g. as set by ADASISv2).

Another feature which may support the longer horizons enabled by the techniques described herein is the provision of an option for a client ADAS application to submit a reset request to the horizon providing subsystem, and to retransmit horizon data to the client ADAS application in response to the received reset request.

In accordance with the ADASISv2 standard protocol, information flows one way, from the horizon provider to the client ADAS application. If the client ADAS application somehow misses the start of the horizon data transmission e.g. due to a synchronization issue, or if a portion of the horizon data is missed due to a network error, the client ADAS application would be unable to properly reconstruct the horizon. This may in some cases be addressed by providing the possibility of the complete horizon being continuously retransmitted, to enable the reconstructing subsystem to fill in any gaps and/or correct for any missing messages. However, such retransmission increases demand on the network bandwidth. There is also a time-delay before the reconstructing subsystem receives all the necessary data. This is due to the two facts: (a) the horizon providing subsystem is unaware of the error condition and cannot prioritise retransmitting older messages over generating new messages, (b) the reconstructing subsystem / client ADAS application does not have exact knowledge on how much data is missing. They may need to wait for a complete round of horizon data transmission, or even longer to be sure that all messages are received.

Thus, this retransmission process has some disadvantages. It is also not compatible with the concept of offset wraparound used in embodiments of the invention. The client/horizon reconstructing subsystem would not be able to determine the correct offset from an origin of the path in the case that wraparound is a possibility, since the retransmission interferes with the strict ordering of profile messages per attribute type.

Instead, in preferred implementations of the present invention, the client ADAS application can itself trigger a reset of the transmitted horizon data. The client ADAS application can trigger the re-provision of the horizon at any time where this is required, for example when errors are detected or where there are problems with synchronization between the client ADAS application and horizon providing subsystem. The horizon providing subsystem may take additional measures to ensure a fast restoration of ADAS functionality. For example, rather than destroying any horizon content stored internally (and used in providing the initial transmission of horizon data), the horizon providing subsystem may resend the horizon data without rebuilding it from scratch.

The start of the new (retransmitted) horizon after the reset is complete may be marked in the horizon data transmitted by the horizon providing subsystem by the transmission of a resetting stub.

In summary, the techniques of the present invention support the provision of longer range vehicle horizons. These may enable client ADAS applications to perform certain functionality more readily, in particular optimization functionality e.g. optimization to conserve battery power for eVs or fuel for non eV vehicles, support gear selection for non eVs etc.

This is achieved in a manner consistent with the constraints of the existing ADASISv2 protocol, thus providing a solution that can be readily implemented in a universal manner, without the need to resort to proprietary solutions. This approach can therefore be implemented by different car manufacturers operating in the automotive industry.

The techniques may adopt the following principles:
- ensure wire-format (binary) compatibility with ADASIS v2- the techniques can be implemented without changing the number of allocated bits to carry the offset or redefine the meaning of other fields in the profile messages;
- avoid the need for the reconstructing subsystem to be aware of the specific details of the long-range Horizon implementation;
- avoid the need to specifically adapt the client ADAS application/client horizon reconstructing subsystem to implement the long-range horizon. The ADAS client software need not be adapted to support the longer range horizon, with the changes being made on the horizon providing side.

In exemplary embodiments a range of features may be combined to support longer horizons i.e. profile messages being transmitted in respect of positions beyond the inherent ADASISv2 offset limit;
- utilize offset wraparound
- generate messages in the non-decreasing offset order, per each Profile attribute type
- introduce no-change "additional" messages, allowing a client reconstructing subsystem to properly handle multiple offset wraparounds

The following features may additionally be used alone or in any combination, and may further support longer horizons;
- disable horizon data update and retransmission mechanisms
- introduce a new error-correction mechanism instead of horizon retransmission, involving enabling an explicit reset request to be received from the client ADAS application
- Attribute profile messages are generated based on a globally set resolution unit applicable to all attribute types, making the option transparent for a reconstructing subsystem on the client side and consistent across Profiles for all attribute types.
- Attribute profiles are transmitted to the client ADAS application up-to a configured maximum transmitted path length, which may be set on an attribute by attribute basis.
- Route length information is provided using a dedicated route information attribute having an unlimited maximum transmitted path length
- Suppress generation of horizon data once current location reaches a destination of a route
These features may be used to support a maximum transmitted horizon length e.g. profile length up to a practically unlimited length beyond the offset limit.

In accordance with exemplary embodiments described herein, the solution allows ADAS application to:
- Receive Horizon data with a comfortable accuracy up-until the destination, if necessary
- Prioritize exposure of profiles for different attribute types by specifying per-attribute maximum transmitted length to avoid overflows, or excessive processing
- Avoid implications caused by speed unit changes
- Avoid wasting resources on processing data beyond route destination
- Rely on an explicit error correction mechanism

## Claims

1. A method of providing Advanced Driver Assistance System (ADAS) horizon data to a client ADAS application of a vehicle, comprising;
obtaining an ADAS horizon indicative of one or more possible paths that the vehicle may travel in the future through a portion of a road network, and, for each possible path, data indicative of one or more attributes associated with the path, wherein the one or more possible paths include a main path on which a current position of the vehicle lies;
and providing horizon data to the client ADAS application relating to at least the main path of the ADAS horizon, wherein providing the horizon data to the client ADAS application relating to the main path comprises, for each of one or more attributes associated with the main path, generating one or more profile messages indicative of a profile of the attribute along the main path, each profile message being indicative of a value of the attribute associated with a respective given location along the main path, and transmitting each message to the client ADAS application;
the method comprising, for at least one attribute associated with the main path:
generating a plurality of profile messages and transmitting the profile messages to the client ADAS application, wherein each profile message comprises attribute data indicative of a value of the attribute associated with a respective given location along the main path and offset data indicative of an offset along the main path defining the given location;
wherein when an offset of the given location from a reference origin is no greater than an offset threshold, the profile message offset is defined relative to the reference origin and, when the offset of the given location from the reference origin exceeds the offset threshold, the profile message offset is defined relative to an integer multiple of the offset threshold along the main path;
wherein the profile messages in respect of a given attribute are transmitted to the client ADAS application in order of offset of the given locations to which the profile messages relate from the reference origin, including when the offset from the reference origin exceeds the offset threshold;
wherein the given locations along the main path in respect of which profile messages are generated and transmitted for the given attribute include locations at which a change in the value of the attribute occurs, and wherein the method comprises further generating and transmitting at least one additional profile message in respect of the given attribute, each additional profile message being in respect of a given location at which there is no change in the value of the attribute to assist in use of the horizon data by the client ADAS application.

2. The method of claim 1 wherein the offset along the main path is defined using a predetermined offset resolution based on the offset threshold and a desired distance the offset threshold is to represent, wherein the offset resolution is in the range of from 10m to 150m, such as from 15m-30m, for example 25m.

3. The method of any preceding claim wherein the main path comprises a pre-planned route to a destination.

4. The method of any preceding claim comprising, for each of the one or more attributes for which horizon data is provided, transmitting the one or more profile messages associated with respective given location(s) along the main path up to a respective preset maximum transmitted length ahead of a current position along the main path; optionally wherein the preset maximum transmitted length is configurable to different lengths for different attributes.

5. The method of claim 4 wherein the preset maximum transmitted length is configurable for at least one attribute up to an unlimited length along the main path ahead of the current position.

6. The method of claim 4 or 5 as dependent on claim 3 further comprising providing data indicative of a length of the pre-planned route to the client ADAS application using a route information attribute associated with the main path, and setting the preset maximum transmitted length for the route information attribute to be unlimited to ensure that a profile message indicative of a destination of the route is transmitted to the client ADAS application regardless of the length of the route.

7. The method of any of claims 4 to 6 as dependent upon claim 3, wherein, for each attribute, the preset maximum transmitted length ahead of the current position defines a respective horizon window for the attribute that moves along the route as the current position of the vehicle moves along the path, and wherein, when the preset maximum transmitted length reaches the destination, the method comprises ceasing to generate and transmit profile messages for locations beyond the destination thereby capping the horizon window at the destination.

8. The method of any preceding claim wherein the one or more attributes include an attribute indicative of speed limit, wherein the method comprises using the same globally set speed unit when providing horizon data to the client ADAS application relating to values of the speed limit attribute associated with any location in the road network forming part of the horizon and regardless of the current location of the vehicle; optionally wherein the main path extends across a border between countries using different speed units, and the method comprises applying the same speed limit unit to profile messages generated and transmitted in respect of given locations on either side of the border and regardless of the current location of the vehicle.

9. The method of any preceding claim further comprising receiving a reset request from the client ADAS application, and retransmitting the horizon data provided to the client ADAS application in response to the reset request.

10. The method of any preceding claim wherein the reference origin is an origin of the main path;
and/or wherein the profile message offset is given by the following equation;
profile message offset= offset of given location to which profile message relates from reference origin MODULO offset threshold.

11. A method comprising;
a horizon providing subsystem providing ADAS horizon data to a client ADAS application of a vehicle using a method in accordance with any one of claims 1-10, the method further comprising the client ADAS application receiving the transmitted horizon data and using the data to reconstruct the vehicle horizon.

12. The method of claim 11 further comprising the client ADAS application identifying an error situation and/or synchronization issue with respect to the horizon providing subsystem and sending a reset message to the horizon providing subsystem requesting reset of the vehicle horizon, and the horizon providing subsystem receiving the reset message and retransmitting the horizon data.

13. The method of claim 11 or claim 12 as dependent directly or indirectly on claim 6 further comprising the client ADAS application using received route information profile data indicative of the destination of the route to optimize functionality of the vehicle during travel along the route.

14. A computer processing system configured to perform a method according to any preceding claim; or computer software comprising instructions which, when executed on a computer processing system, cause the computer processing system to perform the method of any preceding claim.

15. A horizon providing subsystem configured to provide ADAS horizon data to a client ADAS application of a vehicle, the horizon providing subsystem being configured to perform the method of any one of claims 1 to 10.
